(19)

**Europäisches Patentamt**

**European Patent Office**

**Office européen des brevets**

(11) **EP 3 872 723 A1**

(12) **EUROPÄISCHE PATENTANMELDUNG**

(43) Veröffentlichungstag:
01.09.2021 Patentblatt 2021/35

(21) Anmeldenummer: 21155212.0

(22) Anmeldetag: 04.02.2021

(51) Int Cl.:
*G06Q 10/06* (2012.01)          *G06Q 50/02* (2012.01)
*G06Q 50/30* (2012.01)          *A01B 79/00* (2006.01)
*A01C 23/04* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **26.02.2020 DE 102020001258**

(71) Anmelder: **Schwarte Group GmbH**
**48282 Emsdetten (DE)**

(72) Erfinder:
• **Hartmann, Ferdinand**
**48324 Sendenhorst (DE)**
• **Müller, Steve**
**48268 Greven (DE)**

(74) Vertreter: **Pelster Behrends Patentanwälte PartG mbB**
**Haus Sentmaring 17**
**48151 Münster (DE)**

(54) **DIGITAL VERNETZTES ERFASSUNGSSYSTEM FÜR GÜLLE UND VERFAHREN ZUR ERFASSUNG VON GÜLLE IN EINEM DIGITAL VERNETZTEN ERFASSUNGSSYSTEM**

(57) Die Erfindung betrifft ein digital vernetztes Erfassungssystem für Gülle (1000), das unter anderem wenigstens ein Gülle-Tankfahrzeug (400) umfasst, das so eingerichtet ist,

o dass es Gülle (G) aus wenigstens einem Abgebertank (211) der wenigstens einen Abgeberstelle (200) aufnimmt,

o dass es die aufgenommene Gülle (G) zu einer Aufbringfläche (A1, A2) der wenigstens einen Abgeberstelle (200) und/oder der wenigstens einen Aufnehmerstelle (200*) transportiert und dort aufbringt,

o dass es im Verlauf der Aufbringung der Gülle (G) mittels einer fahrzeugseitigen Steuerungseinrichtung (440) zeitnah wenigstens folgende Handlungen durchführt:

(i) kontinuierliche Analyse der jeweiligen strömenden Gülle (G) durch einen im Güllestrom (Q) angeordneten fahrzeugseitigen Güllesensor (434) auf ihre maßgebliche Nährstoffkonzentration (k) hin und Zuordnung des jeweiligen Analyseergebnisses zur jeweils übernommenen Güllemenge, die ebenfalls fahrzeugseitig kontinuierlich mengenmäßig erfasst wird, zwecks Durchführung einer repräsentativen Probenahme der strömenden Gülle (G);

(ii) Vorgabe einer für die jeweilige Aufbringfläche (A1, A2) zulässigen flächenbezogenen Nährstoffgabe (n);

(iii) Ermittlung von Steuerdaten aus den Handlungen (i) und (ii) zur Veränderung des aus einer Ausbringvorrichtung (470) des Gülle-Tankfahrzeuges (400) austretenden Güllestroms (Q) mit dem Ziel der Einhaltung der zulässigen flächenbezogenen Nährstoffgabe (n) auf die jeweilige Aufbringfläche (A1, A2)

Figur 2

EP 3 872 723 A1

**Beschreibung**

TECHNISCHES GEBIET

Die Erfindung betrifft ein digital vernetztes Erfassungssystem für Gülle im Rahmen einer sog. Güllelieferkette, in an sich bekannter Weise mit wenigstens einer Abgeberstelle und wenigstens einer Aufnehmerstelle jeweils für Gülle, die jeweils so eingerichtet sind, dass sie wenigstens den Mindestanforderungen der Dokumentationspflichten des jeweiligen geltenden Düngerechts dadurch Rechnung tragen, dass sie entsprechende geforderte abgeberseitige und aufnehmerseitige Daten bereitstellen. Weiterhin ist wenigstens ein Gülle-Tankfahrzeug bekannt, das so eingerichtet ist, dass es Gülle aus wenigstens einem Abgebertank der wenigstens einen Abgeberstelle aufnimmt und die aufgenommene Gülle zu einer Aufbringfläche der wenigstens einen Abgeberstelle und/oder der wenigstens einen Aufnehmerstelle transportiert und dort ausbringt. Für die jeweilige Aufbringfläche wird eine zulässige flächenbezogene Nährstoffgabe vorgegeben. Die maßgebliche Nährstoffkonzentration der auszubringenden Gülle wird entweder aufgrund von Erfahrungswerten für die vorliegende Gülle, niedergelegt in sogenannten Standard-Tabellen, oder durch mehrere gemittelte Handproben aus dieser Gülle oder durch eine geeignete und zugelassene automatisierte Probenahme ermittelt. Aus der maßgeblichen Nährstoffkonzentration und der zulässigen flächenbezogenen Nährstoffgabe werden Steuerdaten ermittelt zur Veränderung des aus einer Ausbringvorrichtung des Gülle-Tankfahrzeuges austretenden Güllestroms mit dem Ziel der Einhaltung der zulässigen flächenbezogenen Nährstoffgabe auf die jeweilige Aufbringfläche. Weiterhin werden entsprechende fahrzeugseitige Daten zur Dokumentation bereitgestellt.

Weiterer Gegenstand der Erfindung ist ein Verfahren zur Erfassung von Gülle in einem digital vernetzten Erfassungssystem im Rahmen einer sog. Güllelieferkette.

Unter der Abgeberstelle und einem zugeordneten Abgeber soll nachfolgend ein Tierhaltebetrieb, insbesondere in einer viehstarken Region, und der zugeordnete Landwirt mitgelesen werden. Sinngemäß werden unter der Aufnehmerstelle und einem zugeordneten Aufnehmer ein landwirtschaftlicher Betrieb ohne oder mit geringer Tierhaltung, insbesondere in einer viehschwachen Region, und der zugeordnete Landwirt mitgelesen. Die Aufnehmerstelle mit dem zugeordneten Aufnehmer im Sinne der vorliegenden Anmeldung kann auch eine Biogasanlage mit dem zugeordneten Betreiber sein.

Unter dem Begriff der Gülle sollen im Folgenden die unterschiedlichsten Güllearten und andere Ausscheidungen von Tieren in Tierhaltebetrieben subsumiert werden. Gülle gehört nach Definition beispielsweise der Landesdüngeverordnung Nordrhein-Westfahlen (LDüngV, NRW, 2017) unter anderem zu den sogenannten Wirtschaftsdüngern, zu denen auch Gärrückstände (Substrate) aus Biogasanlagen zählen. Unter dem nachfolgend verwendeten Begriff Gülle sollen stets auch Substrate oder andere über ein Gülle-Tankfahrzeug der vorbeschriebenen Art auf Aufbringflächen aufbringbare Wirtschaftsdünger mitgelesen werden. Die nachfolgend verwendeten und auf die Handhabung von Gülle bezogenen Begrifflichkeiten wie "Auf-" oder "Ausbringung" und diesbezüglich abgewandelte oder erweiterte Begriffe sind gleichbedeutend zu interpretieren.

STAND DER TECHNIK

Die LDüngV (NRW, 2017) schreibt beispielsweise und stellvertretend für andere Verordnungen vor, dass das Aufbringen von Wirtschaftsdüngern auf Flächen in nitratbelasteten Gebieten nur erfolgen darf, wenn vor dem Aufbringen ihre Gehalte an Gesamtstickstoff, verfügbarem Stickstoff oder Ammoniumstickstoff, Gesamtphosphat, Anteil N-tierisch in Prozent (%) und Trockensubstanz (TS) in % auf der Grundlage anerkannter Messmethoden vom Betriebsinhaber oder in dessen Auftrag festgestellt wird. Die Verpflichtung zur Wirtschaftsdüngeranalyse bezieht sich auf Wirtschaftsdünger, die auf Flächen, die mit mehr als 50 % der Fläche in einem nitratbelasteten Gebiet liegen, aufgebracht werden. Zu den nitratbelasteten Gebieten gehören auch Gebiete in Grundwasserkörpern mit einem Nitratgehalt von > 37,5 Milligramm/Liter (mg/l) und steigendem Trend.

Die gleichen Auflagen schreibt beispielsweise das Düngerecht NRW (DüngeVO; LandesdüngeVO, WDüngNachwV; 2017) auch in nicht nitratbelasteten Gebieten vor. Zu den abgeberseitigen Daten gehören beispielsweise gemäß WDüngNachwV die maßgeblichen Nährstoffgehalte der aufzubringenden Gülle, die aus einer möglichst repräsentativ gewonnenen Probe, beispielsweise aus mehreren zufällig gewonnenen Gülle-Handproben, ermittelt wurden.

Die Anforderungen an die Aufbringung von Gülle sind in den letzten Jahren kontinuierlich gestiegen und ein Ende dieser Entwicklung ist derzeit nicht abzusehen. Dies ist vor allem dadurch begründet, dass in viehstarken Regionen nicht ausreichende Aufbringflächen vorhanden sind und sich eine Gülleverbringung in erheblichem Ausmaß in viehschwache Regionen unter Beachtung der Umweltschutzauflagen als notwendig und unabdingbar erweist. Den Anforderungen wird in den rechtlichen Regelungen, beispielsweise in der Düngeverordnung (DüngeVO), Rechnung getragen. In dieser sind aus Gründen des Grund- und Oberflächenwasserschutzes beispielsweise Grenzwerte für die Aufbringmenge und Beschränkungen der Aufbringzeiten enthalten. Insgesamt führt dies zu steigenden Anforderungen auch an die Erfassung und die Dokumentation von Nährstofffrachten.

Das herkömmliche und zugelassene Verfahren der geltenden Düngeverordnung sieht im Rahmen der sogenannten Güllelieferkette eine Bestimmung der Nährstoffgehalte aus Standard-Tabellen oder eine Probennahme am Güllelager beim Abgeber, einen Probenversand und eine Laboranalyse vor, wobei nur Durchschnittswerte für drei Zeiträume im Frühjahr mit vier Nährstoffkriterien gefordert werden. Die Werte aus den Standard-Tabellen bilden aber in der Regel die hohe Varianz der Nährstoffzusammensetzung auf den Betrieben nicht mehr ab (DLG kompakt, Nr.8/2019). Eine aus zufälligen Einzelproben zusammengeführte Mischprobe ist wegen kaum herzustellender Homogenität der zu probenden Gülle selten repräsentativ, da nur Bruchteile der Güllemenge und diese nur punktuell geprobt werden.

Die Nährstoffbewegungen vom Abgeber zum Aufnehmer (Aufbringflächen) sind darüber hinaus für jede Güllefuhre über das und in dem Gülle-Tankfahrzeug, in der Biogasanlage und beim Abnehmer zu erfassen, zu bilanzieren und zusammen mit allen von der jeweiligen Fachrechtskontrolle geforderten Angaben jeweils in Lieferscheinen zu dokumentieren. Beim Aufnehmer sind für die vorgesehenen Aufbringflächen (Schläge) die zulässigen flächenbezogenen Nährstoffgaben zu ermitteln, zu bilanzieren und zu dokumentieren.

Beispielsweise muss der Lieferschein gemäß WDüngNachwV (NRW) zusätzlich zu den vorstehend angegebenen Nährstoffgehalten folgende Angaben enthalten:

- Name, Anschrift und IT-/ZID-Nummer des Abgebers
- Name, Anschrift und IT-/ZID-Nummer des Aufnehmers
- Lieferdatum/-zeitaum (max. 1 Monat)
- Wirtschaftsdüngerart
- Menge in Tonnen oder $m^3$
- Nährstoffgehalte (wie vorstehend angegeben)
- Gesamtnährstoffmenge
- Name und Anschrift des Beförderers.

Eine neue Düngeverordnung (DüV-2020; NRW), deren Inkraftsetzung in 2020 erwartet wird, fordert eine schlagbezogene Dokumentationspflicht der Düngemaßnahmen. Angestrebt wird als Endziel eine konkrete und feinstrukturierte räumliche Zuordnung der ausgebrachten Nährstofffrachten, also eine echte Nährstoffbilanzierung auf einzelnen Schlägen bis hin zu einer sogenannten Applikationskarte für die einzelnen Schläge. Dies wird durch die Angabe folgender Parameter auf dem Lieferschein erfüllt:

- Name und Betriebsnummer des Bewirtschafters (Aufnehmer)
- Datum der Düngemaßnahme
- Schlagnummer/Schlagnahme bzw. Bewirtschaftungseinheit
- Größe des Schlages bzw. der Bewirtschaftungseinheit
- Düngerart
- gesamte schlagbezogene Ausbringmenge in $m^3$
- über die gesamte, schlagbezogene Ausbringmenge gemittelte Messwerte der geforderten Mindestangaben (Gesamt-N, Ammonium-N, Gesamt-P) einschließlich TS-Gehalt.

Das manuelle Zusammenführen der vorgenannten Angaben, auch wenn es in Teilen computerunterstützt erfolgen kann, ist aufwendig, fehlerbehaftet und die Ergebnisse liegen für die jeweilige Anwendung nicht in einer angemessenen verzugsarmen Echtzeit vor.

Historisch gesehen hat die Datenverarbeitungs- und Steuerungstechnik in ihrem jeweiligen zeitnahen Stand der Technik auch in die vorgenannte Güllelieferkette Einzug gehalten, beispielsweise wo Nährstoffgehalte der Gülle analysiert, Daten ermittelt, übertragen, verarbeitet, ausgewertet, dokumentiert und gespeichert werden müssen. Dies ist beispielsweise seit der Einführung der Infrarottechnologie der Fall, wo Nah-Infrarot-Sensoren (NIRS) zur Anwendung kommen, die in Verbindung mit einem Kalibrationsmodell die relevanten und maßgeblichen Nährstoffgehalte in einer vorbeiströmenden Gülle ermitteln. Diesbezügliche Messverfahren und die daraus resultierende Dokumentation der Gülle- und Gärreste-Inhaltsstoffe sind in den deutschen Bundeländern Nordrhein-Westfahlen (NRW) und in Schleswig-Holstein (SH) bereits gesetzlich anerkannt.

Im Dokument US 2010 311 173 A1 **(D1)** ist Verfahren offenbart zur landwirtschaftlichen Bewertung von Tierexkrementen in Form von Aufschlämmung und Gülle sowie ein System, mit dem dieses Verfahren durchgeführt wird. Das System besteht aus Tierfarmen, die Exkremente produzieren, Ackerflächen für die landwirtschaftliche Nutzung der Exkremente sowie Lastkraftwagen zum Aufnehmen und Transportieren der Exkremente. Das Verfahren umfasst die folgenden Schritte:

a) Bereitstellen mindestens eines Datenservers in Form einer zentralen Verarbeitungs- und Steuereinheit, die eine Datenbank verwaltet;

b) Bereitstellung eines Client-Computers eines Benutzers für die Tierfarmen und die Ackerflächen;

c) Verbinden des Client-Computers des Benutzers mit dem Datenserver über ein Datennetz;

d) Bereitstellen eines Mittels zum Senden und Empfangen von Daten an den Datenserver über das Datennetz an die Lastkraftwagen;

e) Bestimmen der Positionsdaten bezüglich des geografischen Standorts der Tierfarmen und Ackerflächen und Eingeben der Daten in die Datenbank des Datenservers;

f) jederzeitiges Bestimmen der Daten über das Produktionsvolumen und die Nährstoff-Eigenschaften der von jeder Tierhaltung produzierten Exkremente und Eingeben der Daten in diese Datenbank;

g) jederzeitiges Bestimmen der Daten über die Exkrement-Absorptionskapazität jeder Ackerfläche und Eingeben der Daten in die Datenbank;

h) jederzeitiges Bestimmen der Daten über die Position und den Ladestatus aller Lastkraftwagen in der Flotte und Eingeben der Daten in die Datenbank;

i) Festlegen der Parameter der Exkrement-Absorptionskapazität mittels eines mit dem Datenserver verbundenen Entscheidungsagenten auf der Grundlage der Daten über das Volumen und die Nährstoffeigenschaften der von einer Tierfarm erzeugten Exkremente, die Parzellen oder Ackerflächen, die Parameter der Verfügbarkeit, Position und des Ladezustands der Lastkraftwagen in der Flotte, über mindestens eine Parzelle, auf der das Exkrement-Volumen verteilt werden soll, und mindestens ein Lastkraftwagen in der Flotte, um dieses zu transportieren;

j) Zuweisen der mit einem oder mehreren Lastkraftwagen der Flotte zu transportierenden Exkremente durch diesen Entscheidungsträger;

k) Senden eines Transportauftrages an die zugewiesenen Lastkraftwagen durch den Entscheidungsträger oder den Datenserver;

l) Transport der zugewiesenen Exkremente von jeder Tierfarm zu der oder den in Schritt i) festgelegten Parzelle(n) mittels des zugewiesenen Lastkraftwagens oder der zugewiesenen Lastkraftwagen und

m) Verteilen der Exkremente auf der oder den zugewiesenen Parzelle(n).

In der Beschreibung der **D1** ist weiterhin offenbart, dass, sobald der Lastkraftwagen, beispielsweise ein Gülle-Tankfahrzeug, die Gülle aufgenommen hat und einmal unterwegs ist, es möglich ist, die qualitative Analyse der Gülle durchzuführen, wobei der Server und der Entscheidungsträger über diese gemessenen Eigenschaften der Gülle informiert werden, um eine sofortige Entscheidung zu treffen über das Ackerland, auf das die Gülle transportiert und ausgebracht werden soll, oder über die alternative Behandlung, der die Gülle unterzogen werden muss.

Ob es sich bei der vorbeschriebenen Analyse der Gülle um eine repräsentative Probenahme handelt und wie diese ggf. durchgeführt wird, ist in **D1** nicht offenbart. Weiterhin ist nicht offenbart, ob und wie bei unterschiedlichen und ggf. schwankenden zulässigen flächenbezogenen Nährstoffgaben der Ackerfläche(n), auf die die Gülle ausgebracht werden soll, eine notwendige und auch hinreichende Anpassung der jeweils spezifischen Ausbringmengen an Gülle vorgesehen ist. Unterschiedliche zulässige flächenbezogene Nährstoffgaben sind nämlich dann relevant und zu beachten, wenn Teile der Ackerflächen an Gewässer unmittelbar oder mittelbar in einem Nahbereich angrenzen und die Ausbringmengen an Gülle entsprechend variabel anzupassen sind.

Im Dokument DE 20 2006 015 589 U1 **(D2)** ist ein Fahrzeug zur Ausbringung von Gülle beschrieben, das einen Vorratsbehälter und wenigstens eine mit dem Vorratsbehälter mittels eines Leitungssystems verbundene Verteilervorrichtung aufweist. Weiterhin sind ein Sensor zum Messen der Inhaltsstoffe der auszubringenden Gülle und eine Auswertevorrichtung vorgesehen, welche Steuerdaten erzeugt, die durch den Vergleich der vom Sensor gemessenen Inhaltsstoff-Ist-Daten der Gülle mit vorgebbaren Inhaltsstoff-Daten berechnet werden. Mittels der Verteilervorrichtung ist in Abhängigkeit der von der Auswertevorrichtung erzeugten Steuerdaten eine im Vorwege der Ausbringung festzulegende Güllemenge pro Flächeneinheit auf den Boden ausbringbar. Der Sensor ist entweder im Vorratsbehälter oder im Befüllungsbereich oder im Leitungssystem zwischen dem Befüllungsbereich und der Verteilervorrichtung angeordnet.

In allen drei Ausführungsvarianten wird die Gülle ausweislich der Beschreibung vor der Ausbringung und nicht während der Fahrt gemessen und analysiert und darüber hinaus ist gefordert, dass diese Messung und Analyse jeweils zeitnah zur Ausbringung zu erfolgen hat.

Eine repräsentative Probenahme scheint bei der Anordnung des Sensors im Vorratsbehälter oder im Befüllungsbereich nicht vorzuliegen, allenfalls bedingt dann, wenn der Analyse jeweils eine zeitnahe Befüllung des jeweiligen Vorratsbehälters vorangegangen ist, die einen Mischungs- und Umrühreffekt erzeugt. Selbst wenn die gewonnene Probe repräsentativ zu der insgesamt in den Vorratsbehälter überführten Güllemenge sein sollte, dann sind bis zur Ausbringung der Gülle Entmischungs- und Sedimentationsvorgänge zu erwarten, die eine sichere notwendige und auch hinreichende Anpassung der Güllemenge an zulässige flächenbezogene Nährstoffgaben der Ackerfläche(n) konterkarieren können. Mit derartigen störenden Einflüssen ist immer dann zu rechnen, wenn die Ausbringung der Gülle, aus welchen Gründen auch immer, nicht zeitnah zur Analyse erfolgen kann. Bei diesem Sachverhalt steht der Einsatz des bekannten Gülle-Fahrzeuges unter dem in **D2** erwähnten beschränkenden Vorbehalt, dass die Analyse zeitnah zur Ausbringung zu erfolgen hat. Eine repräsentative Probenahme bzw. eine repräsentative Mischprobe scheint dann vorzuliegen, wenn der Güllevorrat im Vorratsbehälter durch Umpumpen über das Leitungssystem, in dem der Sensor auch angeordnet sein kann, zunächst hinreichend homogen durchmischt wird. Allerdings steht auch diese Variante unter dem vorstehend erwähnten Vorbehalt, dass auch hier die Analyse zeitnah zur Ausbringung zu erfolgen hat.

Weiterhin ist nicht offenbart, ob und wie bei unterschiedlichen und ggf. schwankenden zulässigen flächenbezogenen Nährstoffgaben der Ackerfläche(n), auf die die Gülle ausgebracht werden soll, eine notwendige und auch hinreichende Anpassung der jeweils spezifischen Ausbringmengen an Gülle vorgesehen ist.

Darüber hinaus ist aus der DE 10 2008 005 650 A1 **(D3)** ein Verfahren und eine Vorrichtung zur Ausbringung von Gülle durch ein Gülle-Tankfahrzeug bekannt, bei dem die auszubringende Gülle von einem in seiner Funktion nicht näher beschriebenen Sensor zeitnah zur Ausbringung bezüglich ihrer Inhaltsstoffe analysiert wird. Die analytisch gewonnenen Inhaltsstoff-Ist-Daten werden mit vorgegebenen Inhaltsstoff-Daten in einer Auswertevorrichtung verglichen. In Abhängigkeit dieses Vergleichs werden von der Auswertevorrichtung Steuerdaten ermittelt, die einer einstellbaren Vorrichtung (Pumpe) zugeführt werden, mit welcher die Güllemenge veränderbar ist. Eine Verteilervorrichtung wird von der einstellbaren Vorrichtung aufgrund der Steuerdaten so angesteuert, dass die pro Flächeneinheit auszubringende Menge der Gülle - bezogen auf ihre Inhaltsstoffe - entsprechend den Steuerdaten reguliert wird. Die von der Auswertevorrichtung ermittelten Steuerdaten können über eine Verbindung in Form einer Verbindungsleitung oder drahtlos an die einstellbare Vorrichtung oder die Verteilervorrichtung übertragen werden. Ob es sich bei den vorgegebenen Inhaltsstoff-Daten nach **D3** um zulässige flächenbezogene Nährstoffgaben für die Aufbringfläche handelt, auf die die Gülle aufgebracht wird, ist in dem Dokument nicht erwähnt.

Bei den vorstehend thematisierten "Insellösungen" der Güllelieferkette, die sich in der Praxis auf unterschiedliche Gülle-Tankfahrzeugkonzepte und Erfassungssysteme stützen, ist es bis zum heutigen Tag mehr oder weniger geblieben, wobei die Überwachung der singulären Prozesse und/oder Zustände und die zugeordnete Datenhandhabung heute weitestgehend noch nicht digitalisiert durchgeführt wird.

Folgende Nachteile lassen sich bei den heute realisierten Güllelieferketten mit den unterschiedlichsten Gülle-Tankfahrzeugkonzepten und Erfassungssystemen konstatieren:

- es fehlt der Ein- und Überblick in bzw. über die gesamte Gülleerfassung, Gülleverbringung und Gülleaufbringung,
- es fehlt die maximal mögliche Manipulationssicherheit beim Umgang mit den Gülleerfassungsdaten speziell und den Daten allgemein,
- es fehlt die uneingeschränkte Überführbarkeit der Gülleerfassungsdaten und auch anderer Daten in andere Erfassungssysteme,
- es fehlt die uneingeschränkte Verfügbarkeit der an der Güllelieferkette beteiligten Akteure über die Fülle an insgesamt vorhandenen und relevanten Gülleerfassungsdaten und anderer Daten zu jeder Zeit und an jedem Ort der Güllelieferkette,
- es fehlt eine weitestgehende Transparenz und lückenlose Dokumentation der und eine umfassende Information über die insgesamt vorliegenden Gülleerfassungsdaten,
- es fehlt die Möglichkeit, bei der Übernahme der Gülle aus dem Abgebertank, das heißt im Stillstand des Gülle-Tankfahrzeuges, und auch beim Transport sowie bei der Ausbringung der Gülle jeweils eine repräsentative Probenahme bzw. eine repräsentative Probung bzw. eine repräsentative Analyse der Gülle auch unter Schwankungen der Durchflussmenge und der Nährstofffracht durchzuführen und es fehlt weiterhin die Möglichkeit, die Ausbringung der Gülle, und zwar insbesondere im Verlauf der Ausbringung, unmittelbar, zeitnah an die Analyseergebnisse anzupassen.

Es ist Aufgabe der vorliegenden Erfindung, ein digital vernetztes Erfassungssystem für Gülle und ein Verfahren zur Erfassung von Gülle in einem digital vernetzten Erfassungssystem für Gülle zu schaffen, die die vorstehend angegebenen Nachteile überwinden, insbesondere die Nachteile im Zusammenhang mit der mangelhaften Repräsentativität der Probenahme und Analyse der strömenden Gülle, und die eine automatische, schlagbezogene Erfassung und Dokumentation der Nährstofffracht bei der Übernahme, der Verbringung und Aufbringung von Gülle in einer für alle Akteure der Güllelieferkette zugänglichen und zeitnahen Form sicherstellen.

ZUSAMMENFASSUNG DER ERFINDUNG

Diese Aufgabe wird durch ein digital vernetztes Erfassungssystem für Gülle mit den Merkmalen des Anspruchs 1 gelöst. Vorteilhafte Ausgestaltungen des erfindungsgemäßen Erfassungssystems sind Gegenstand der zugeordneten Unteransprüche. Ein Verfahren zur Erfassung von Gülle in einem digital vernetzten Erfassungssystem für Gülle ist Gegenstand des nebengeordneten Anspruchs 16. Eine vorteilhafte Ausgestaltung des erfindungsgemäßen Verfahrens ist im zugeordneten Unteranspruch beschrieben.

Die Erfindung geht systemtechnisch aus von einem wenigstens in Teilen an sich bekannten Erfassungssystem für Gülle im Rahmen einer ebenfalls an sich bekannten Güllelieferkette, wobei die Merkmale dieser Teile in den Merkmalen des einteiligen Anspruchs 1 ihren Niederschlag finden. Dabei beschränkt sich das digital vernetzte Erfassungssystem für Gülle in seiner Basisversion und im Rahmen der erfindungsgemäßen Aufgabenstellung zunächst auf die vollständige digitale Vernetzung von Abgeberstelle für Gülle, Gülle-Tankfahrzeug und Aufnehmerstelle für Gülle. Eine Biogasanlage, die auch als Aufnehmerstelle für Gülle fungieren kann, kann, so sieht es die Erfindung vor, optional und zusätzlich in die erfindungsgemäße vollständige digitale Vernetzung einbezogen werden.

Die der Erfindung zugrundeliegende Aufgabe wird systemtechnisch gelöst durch die nachstehenden Merkmale, wobei die vorstehenden Anmerkungen zur Basisversion analog gelten sollen. Das Erfassungssystem für Gülle umfasst:

- wenigstens eine Abgeberstelle und wenigstens eine Aufnehmerstelle jeweils für Gülle, die jeweils so eingerichtet sind, dass sie wenigstens den Mindestanforderungen der Dokumentationspflichten des jeweiligen geltenden Düngerechts dadurch Rechnung tragen, dass sie entsprechende geforderte abgeberseitige Daten und aufnehmerseitige Daten bereitstellen,
- wenigstens ein Gülle-Tankfahrzeug, das so eingerichtet ist,

  ○ dass es Gülle aus wenigstens einem Abgebertank der wenigstens einen Abgeberstelle aufnimmt,
  ○ dass es die aufgenommene Gülle zu einer Aufbringfläche der wenigstens einen Abgeberstelle und/oder der wenigstens einen Aufnehmerstelle transportiert und dort ausbringt,
  ○ dass es im Verlauf der Ausbringung der Gülle mittels einer fahrzeugseitigen Steuerungseinrichtung zeitnah wenigstens folgende Handlungen durchführt:

    (i) kontinuierliche Analyse der jeweiligen strömenden Gülle durch einen im Güllestrom angeordneten fahrzeugseitigen Güllesensor auf ihre maßgebliche Nährstoffkonzentration hin und Zuordnung des jeweiligen Analyseergebnisses zur jeweils übernommenen Güllemenge, die ebenfalls fahrzeugseitig kontinuierlich mengenmäßig erfasst wird, zwecks Durchführung einer repräsentativen Probenahme der strömenden Gülle,
    (ii) Vorgabe einer für die jeweilige Aufbringfläche zulässigen flächenbezogenen Nährstoffgabe,
    (iii) Ermittlung von Steuerdaten aus den Handlungen (i) und (ii) zur Veränderung des aus einer Ausbringvorrichtung des Gülle-Tankfahrzeuges austretenden Güllestroms mit dem Ziel der Einhaltung der zulässigen flächenbezogenen Nährstoffgabe auf die jeweilige Aufbringfläche und
    (iv) Bereitstellung von entsprechenden fahrzeugseitigen Daten zur Dokumentation,

  ○ dass das Gülle-Tankfahrzeug die jeweilige strömende Gülle (G) bei der Übernahme aus dem Abgebertank (211) in einen fahrzeugseitigen Güllebehälter (410) durch den fahrzeugseitigen Güllesensor (434) auf ihre maßgebliche Nährstoffkonzentration (k) hin kontinuierlich analysiert und das jeweilige Analyseergebnis der jeweils übernommenen Güllemenge, die ebenfalls fahrzeugseitig kontinuierlich mengenmäßig erfasst wird, zwecks Durchführung einer repräsentativen Probenahme der strömenden Gülle (G) zuordnet;

mit dem Erfassungssystem für Gülle, bei dem weiterhin

- die wenigstens eine Abgeberstelle eine abgeberstellenseitige Datenübertragungseinrichtung aufweist,
- die wenigstens eine Aufnehmerstelle eine aufnehmerstellenseitige Datenübertragungseinrichtung aufweist,
- das wenigstens eine Gülle-Tankfahrzeug eine fahrzeugseitige Datenübertragungseinrichtung aufweist,
- in oder im Bereich der wenigstens einen Abgeberstelle jeweils wenigstens eine abgeberstellenseitige Fernsteuereinrichtung vorgesehen ist,
- in oder im Bereich der wenigstens einen Aufnehmerstelle jeweils wenigstens eine aufnehmerstellenseitige Fernsteuereinrichtung vorgesehen ist,
- an oder im Bereich der wenigstens einen Abgeberstelle jeweils eine abgeberseitige Fernsteuerungseinrichtung für einen Abgeber von Gülle vorgesehen ist,
- an oder im Bereich der wenigstens einen Aufnehmerstelle jeweils eine aufnehmerseitige Fernsteuerungseinrichtung für einen Aufnehmer von Gülle vorgesehen ist,
- in dem wenigstens einen Gülle-Tankfahrzeug jeweils wenigstens eine fahrerseitige Fernsteuerungseinrichtung für einen zugeordneten Fahrer und/oder bei einem zugeordneten Fuhrunternehmen eine fuhrunternehmerseitige Fernsteuerungseinrichtung vorgesehen sind/ist,
- die jeweilige Datenübertragungseinrichtung sowie die jeweilige Fernsteuerungseinrichtung mit einem Datennetzwerk datenleitend verbunden ist, und das Datennetzwerk mit wenigstens einem Prozessor und wenigstens einem Datenspeicher in datenleitender Verbindung steht,

- die jeweilige Datenübertragungseinrichtung sowie die jeweilige Fernsteuerungseinrichtung dazu eingerichtet sind, die zugeordneten abgeberseitigen, aufnehmerseitigen und fahrzeugseitigen Daten in einer der jeweiligen Anwendung angemessenen verzugsarmen Echtzeit drahtlos an das Datennetzwerk zu senden und/oder von diesem zu empfangen.

Ein erster erfinderischer Grundgedanke besteht darin, unabhängig davon, ob die zu übernehmende Gülle bereits bei dem Abgeber geprobt und mengenmäßig erfasst ist oder wird, bei der Übernahme der Gülle den Güllestrom, und zwar die gesamte Güllemenge, fahrzeugseitig fortlaufend und kontinuierlich auf die gesetzlich geforderte maßgebliche Nährstoffkonzentration hin zu analysieren. Die zu überführende Güllemenge wird dabei ebenfalls fahrzeugseitig mengenmäßig erfasst, beispielsweise durch einen Volumen- oder Massendurchflussmesser, und der Messwert wird der maßgeblichen Nährstoffkonzentration zugeordnet. Die Analyse der Gülle auf ihre maßgebliche Nährstoffkonzentration hin erfolgt über einen fahrzeugseitigen Güllesensor im Güllestrom, der vorzugsweise als Nah-Infrarot-Sensor (NIRS) ausgebildet ist. Es ist offensichtlich, wenn es sich bei der eingesetzten fahrzeugseitigen Sensorik um eine gesetzlich anerkannte Messmethode handelt, dass die diesbezügliche fahrzeugseitige Probenahme über die gesamte Zeitdauer des Güllesflusses eine bessere Repräsentativität zeigt als Mischproben aus punktuell und zufällig genommenen Einzelproben, in der Regel aus einer Anzahl von Handproben an verschiedenen Stellen des Abgebertanks oder in einem abgeberstellenseitigen Fließweg des Güllestroms zu verschiedenen Zeiten der Übernahme.

Im allgemeinsten Falle unterliegen der Güllestrom Q und die maßgebliche Nährstoffkonzentration k der Gülle zeitlichen Schwankungen (Q(t); k(t)), bedingt durch Entmischungs- und Sedimentations-Effekte und Temperatureinflüsse und auch durch veränderliches Betriebsverhalten von Komponenten wie Pumpen und Ventilen. Die repräsentative Probenahme oder auch Analyse der zu überführenden, zu transportierenden oder auszubringenden Gülle versteht sich dergestalt, dass kontinuierlich differenzielle und im Grenzfall infinitesimale Mengen des Güllestroms Q(t) (aus dem Mengenstrom Gülle, beispielsweise in kg Gülle/s) messtechnisch erfasst und dass diesen jeweiligen Teilmengen, die zwangsläufig zeitabhängig gewonnen werden, die jeweils hierfür gemessene Nährstoffkonzentration k(t) zugeordnet wird. Es lässt sich dadurch ein exaktes, zeitabhängiges Nährstoffprofil des Güllestromes Q(t), beispielsweise in Gramm (g) oder Kilogramm (kg) Nährstoff, gewinnen, das erfindungsgemäß unmittelbar zeitlich eine Ausbringung der Gülle steuert.

Für die Übernahme der Gülle lässt sich aus der vorstehend beschriebenen repräsentativen Probenahme und aus der Zeitdauer der gesamten Überführung die gesamte Nährstoffmenge, beispielsweise in kg Nährstoff, für die gesamte überführte oder auszubringende Güllemenge ermitteln, sodass eine aufbringflächenbezogene Bilanzierung und Steuerung der Gülleausbringung beispielsweise durch den Betreiber der Güllekette vorgenommen werden kann.

Mischungs- und Sedimentationseffekte spielen somit bei der Überführung und auch der nachfolgenden Ausbringung keine Rolle mehr und der Vorbehalt, dass die Analyse zeitnah zur Ausbringung zu erfolgen hat, wie dies bei Lösungen nach dem Stand der Technik gefordert wird, kann entfallen. Selbst beim Transport der Gülle lässt sich mit dem erfindungsgemäßen Verfahren die Repräsentativität der Messung mit hoher Genauigkeit sicherstellen, wenn die transportierte Güllemenge über das Messsystem zur Sicherstellung einer hinreichenden Homogenität der Gülle so lange umgepumpt und dabei kontinuierlich geprobt und analysiert wird, bis sich ein konstanter repräsentativer Durchschnittswert der maßgeblichen Nährstoffkonzentration einstellt.

Ein zweiter erfinderischer Grundgedanke besteht darin, unabhängig von Gülle-Tankfahrzeugsystemen und übergeordneten Erfassungssystemen (Güllelieferketten), sämtliche Teilvorgänge und -aspekte der Gülleabgabe, der Güllesammlung im Gülle-Transportfahrzeug, wobei die Güllesammlung im weitesten Sinne auch als Rohstoffsammlung verstanden und in andere ähnlich gelagerte Anwendungsfelder übertragen werden kann, dem Gülletransport bzw. der Gülleverbringung und der Gülleaufbringung auf Aufbringflächen, digital abzubilden und vollständig miteinander zu verknüpfen. Mit dieser digitalen Abbildung und Verknüpfung wird gleichzeitig eine transparente Vernetzung der gesamten Güllelieferkette realisiert (Abgeberstelle, Gülle-Transportfahrzeug, Aufnehmerstelle, die auch als Biogasanlage ausgebildet sein kann, jeweils mit den zugeordneten Akteuren und der jeweils zugeordneten manuellen oder digitalisierten Datenhandhabung), die einen bisher nie dagewesenen Ein- und Überblick in bzw. über die gesamte Güllelieferkette ermöglicht.

Die vollständige Digitalisierung erlaubt eine Vernetzung und Anbindung an andere Systeme in der Güllelieferkette mit einfachen Mitteln. Alle Vorgänge werden transparent und lückenlos dokumentiert, Fehler werden über umfangreiche Checklisten und Anleitungen reduziert, wobei dies der Umweltsicherheit direkt zugutekommt. Zudem lassen sich Kosten- und Zeiteinsparungen durch kürzere Einarbeitungszeiten für beispielsweise neue Fahrer realisieren.

Die Erfindung sieht weiterhin vor, dass optional und zusätzlich wenigstens eine Aufnehmerstelle als Biogasanlage fungiert, die so eingerichtet ist, dass sie ein im Biogas-Prozess beim Einsatz von Gülle anfallendes Substrat sammelt und zur Abgabe zusammen mit zugeordneten anlagenseitigen Daten bereitstellt. Darüber hinaus weist die wenigstens eine Biogasanlage eine anlagenseitige Datenübertragungseinrichtung auf und in oder im Bereich der wenigstens einen Biogasanlage ist jeweils wenigstens eine anlagenseitige Fernsteuereinrichtung vorgesehen. Die Datenhandhabung in der Biogasanlage über die anlagenseitige Datenübertragungseinrichtung und die anlagenseitige Fernsteuerungseinrichtung erfolgt analog beispielsweise zu jener in der Abgabestelle.

Die vorstehend erwähnte Transparenz manifestiert sich insbesondere dadurch, dass bestimmte Akteure in der Güllelieferkette, nämlich der Fahrer und/oder das Fuhrunternehmen, durch Fernsteuerungseinrichtungen der vorstehend erwähnten Art in einer der jeweiligen Anwendung angemessenen verzugsarmen Echtzeit Zugriff auf alle für diese Akteure relevanten Daten und Informationen bekommen können. Das gilt erst recht für die einschlägigen Akteure der Abgeberstelle, der Aufnehmerstelle und optional und zusätzlich auch für den Betreiber der Biogasanlage, denen neben den vorstehend erwähnten internetfähigen mobilen Endgeräten zusätzlich auch stationäre Fernsteuerungseinrichtungen, internetfähige stationäre Endgeräte mit dem notwendigen Zubehör, wie Drucker, Monitore und andere Ausgabegeräte, zur Verfügung stehen.

Das erfindungsgemäße Datennetzwerk ist, wie dies vorgesehen wird, als Web oder Ethernet oder Intranet oder Internet ausgebildet.

Das erfindungsgemäße digital vernetzt Erfassungssystem ist auf einen sehr stark auf Sicherheit ausgelegten Umgang mit den Daten ausgelegt. Neben der Speicherung der Daten beispielsweise auf Servern von Kontrollbehörden kann die Speicherung der Daten in einer geschlossenen Daten-Cloud direkt auf Servern des jeweilig autorisierten Betreibers des digital vernetzten Erfassungssystems erfolgen, wobei der mit dem Datennetzwerk jeweils datenleitend verbundene wenigstens eine Prozessor und wenigstens eine Datenspeicher in dieser geschlossenen Daten-Cloud angeordnet und für diese Speicherung vorgesehen sind. Die Daten sind dort manipulationssicher angelegt und beispielsweise über Datenschnittstellen als csv-Dateien jederzeit in andere Systeme überführbar.

Das Problem teilweise mangelnder Konnektivität wird erfindungsgemäß dadurch gelöst, dass die abgeberstellenseitige, die fahrzeugseitige und die anlagenseitige Steuerungseinrichtung sowie die Aufnehmerstelle jeweils einen temporären Zwischenspeicher aufweist, der so eingerichtet ist, dass die jeweils zugeordneten abgeberseitigen, fahrzeugseitigen, anlagenseitigen sowie die aufnehmerseitigen Daten im Zwischenspeicher temporär gespeichert und zu einem späteren Zeitpunkt, wenn eine Netzverbindung wieder vorliegt, übertragen werden.

Bei Stromausfall stellen Akkus und die grundsätzliche Verwendung von beispielsweise eReader-Displays sicher, dass keine Daten verloren gehen. Grundsätzlich erfolgt die Datenübertragung bidirektional, so dass beispielweise dem Fahrer des Gülle-Tankfahrzeugs Informationen und Anweisungen direkt auf die im Führerhaus installierte Fernsteuerungseinrichtung der vorgenannten Art, beispielsweise das Tablet, gegeben werden können.

Weiterhin ist vorgesehen, dass datenleitende Verbindungen innerhalb der Abgeberstelle, der Aufnehmerstelle und des Gülle-Tankfahrzeuges als wenigstens eine der folgenden ausgebildet sind:

- BUS-Systeme wie

    ◦ Profibus
    ◦ CAN-Bus
    ◦ MOD-Bus,

- Ethernet,
- Direktverbindung,
- allgemeine drahtlose Verbindungen wie z.B.

    ◦ Bluetooth
    ◦ Funkstrecke
    ◦ RFID.

Systemtechnisch schlägt die Erfindung zur einfachen Einbindung der wenigstens einen Abgeberstelle in das digital vernetzte Erfassungssystem und zur Vernetzung mit dem demselben vor, dass die wenigstens eine Abgeberstelle eine abgeberstellenseitige Steuerungseinrichtung zur automatischen Steuerung der Abgeberstelle aufweist, mit wenigstens einem abgeberstellenseitigen Prozessor und wenigstens einem abgeberstellenseitigen Datenspeicher. Die abgeberstellenseitige Steuerungseinrichtung ist datenleitend verbunden mit einer abgeberstellenseitigen Sensoreinrichtung zur Ermittlung der abgeberseitigen Daten und weiterhin über ein abgeberstellenseitiges Datennetzwerk datenleitend verbunden mit der abgeberstellenseitigen Datenübertragungseinrichtung und der abgeberstellenseitigen Fernsteuerungseinrichtung.

Die wenigstens eine Abgeberstelle hat in der vorgeschlagenen Ausgestaltung Zugriff auf ein im digital vernetzten Erfassungssystem implementiertes Monitoring- und Analysetool, das automatisch wichtige Daten zur Gülle im Abgebertank ermittelt, nämlich vorzugsweise Menge, Art der Gülle, maßgebliche Nährstoffkonzentration. Diese und andere Daten werden durch geeignete Sensoren der abgeberseitigen Sensoreinrichtung ermittelt, wobei die erfindungsgemäße abgeberseitige Sensoreinrichtung mindestens einen der folgenden Sensoren aufweist:
Temperatursensor; Drucksensor; Durchfluss-/Strömungssensor; Leitfähigkeitssensor; Trübungssensor/Schwebekörpersensor; Viskositätssensor; pH-Wert-Sensor; Schaumsensor; Füllstandssensor; Leermeldesensor; Bildsensor, insbesondere Videokamera; Drehzahlsensor; Gewichtssensor.

Die an der Abgeberstelle gewonnenen Daten werden direkt und in einer der jeweiligen Anwendung angemessenen verzugsarmen Echtzeit an den oder die Betreiber der Güllelieferkette übermittelt und eröffnen eine zusätzliche Dimension für die Umweltsicherheit. Der zuständige Betreiber kann zum Beispiel ggf. nicht verkehrsfähige Chargen sofort von der Abholung ausschließen oder sicherstellen, dass auf einer Gülle-Erfassungstour wirklich nur bestimmte Güllesorten erfasst werden. Der Betreiber kann für alle relevant erscheinenden Parameter Grenzwerte definieren, deren Einhaltung automatisch überwacht und revisionssicher dokumentiert wird.

Systemtechnisch schlägt die Erfindung zur einfachen Einbindung der wenigstens einen Aufnehmerstelle in das digital vernetzte Erfassungssystem und zur Vernetzung mit dem demselben vor, dass die wenigstens eine Aufnehmerstelle wenigstens einen aufnehmerstellenseitigen Datenspeicher aufweist, der über ein aufnehmerstellenseitiges Datennetzwerk datenleitend verbunden ist mit der aufnehmerstellenseitigen Fernsteuerungseinrichtung und der aufnehmerstellenseitigen Datenübertragungseinrichtung.

Weiterhin schlägt die Erfindung zur einfachen Einbindung des wenigstens einen Gülle-Tankfahrzeuges in das digital vernetzte Erfassungssystem und zur Vernetzung mit dem demselben systemtechnisch vor, dass das wenigstens eine Gülle-Tankfahrzeug ein fahrzeugseitiges Annahme- und Abgabesystem für die Gülle mit einer fahrzeugseitigen Messanlage aufweist, das die fahrzeugseitige Steuerungseinrichtung mit wenigstens einem fahrzeugseitigen Prozessor und wenigstens einem fahrzeugseitigen Datenspeicher aufnimmt. Weiterhin weist die fahrzeugseitige Messanlage wenigstens den fahrzeugseitigen Güllesensor, vorzugsweise einen NIR-Sensor, wenigstens einen fahrzeugseitigen Durchflussmesser und wenigstens eine fahrzeugseitige Güllepumpe und ein fahrzeugseitiges Stellventil oder wenigstens eine regelbare fahrzeugseitige Güllepumpe allein auf. Die fahrzeugseitige Steuerungseinrichtung ist einerseits datenleitend verbunden ist mit der fahrzeugseitigen Messanlage zur Ermittlung der fahrzeugseitigen Daten und andererseits datenleitend verbunden mit der fahrzeugseitigen Datenübertragungseinrichtung.

Die notwendigen Steuerungsdaten für das fahrzeugseitige Annahme- und Abgabesystem werden im Bedarfsfall durch geeignete Sensoren bereitgestellt. Das Annahme- und Abgabesystem weist neben dem fahrzeugseitigen Durchflussmesser und dem fahrzeugseitigen Güllesensor mindestens einen der folgenden fahrzeugseitigen Sensoren auf: Temperatursensor; Drucksensor; Leitfähigkeitssensor; Schwebekörpersensor; Viskositätssensor; pH-Wert-Sensor; Schaumsensor; Füllstandssensor; Leermeldesensor; Bildsensor, insbesondere Videokamera; Gewichtssensor; Endlagensensor; Lagerüberwachungssensor; Verschleißsensor; Drehmomentsensor; Drehzahlsensor.

Systemtechnisch sieht die Erfindung zur einfachen Einbindung der wenigstens einen Biogasanlage in das digital vernetzte Erfassungssystem und zur Vernetzung mit dem demselben vor, dass die wenigstens eine Biogasanlage eine anlagenseitige Steuerungseinrichtung mit wenigstens einem anlagenseitigen Prozessor und wenigstens einem anlagenseitigen Datenspeicher zur automatischen Steuerung der Aufnahme des Substrats in den und zur Abgabe aus dem Substratbehälter aufweist. Die anlagenseitige Steuerungseinrichtung ist über ein anlagenseitiges Datennetzwerk datenleitend verbunden ist mit einer anlagenseitigen Sensoreinrichtung zur Ermittlung wenigstens der anlagenseitigen Daten und weiterhin datenleitend verbunden ist mit der anlagenseitigen Fernsteuerungseinrichtung und der anlagenseitigen Datenübertragungseinrichtung.

Diese und andere Daten werden durch geeignete Sensoren der anlagenseitigen Sensoreinrichtung ermittelt, wobei die erfindungsgemäße anlagenseitige Sensoreinrichtung mindestens einen der folgenden Sensoren aufweist: Temperatursensor; Drucksensor; Durchflusssensor/Strömungssensor; Leitfähigkeitssensor; Leermeldesensor; Trübungssensor/Schwebekörpersensor; Viskositätssensor; pH-Wert-Sensor; Schaumsensor; Füllstandssensor; Bildsensor, insbesondere Videokamera; Gewichtssensor.

Der oder die Betreiber der Güllelieferkette, Kontrollbehörden und/oder andere autorisierte Akteure der Güllelieferkette können im Kontext zu den im digital vernetzten Erfassungssystem implementierten Fernsteuerungseinrichtungen Zugriff haben auf ein im digital vernetzten Erfassungssystem implementiertes umfangreiches Anwenderprogramm, eine sogenannte "AgrarMap" oder ein anderes Programm mit gleichen Eigenschaften und Funktionen, das alle Daten zusammenführt.

Erfindungsgemäß sind die Fernsteuerungseinrichtungen dazu eingerichtet, wenigstens eine der folgenden Maßnahmen auszuführen:

- Auswertung von Gülleerfassungsdaten, nämlich abgeberseitige, aufnehmerseitige, fahrzeugseitige und anlagenseitige Daten, und Ermittlung von Prozessinformationen über den jeweiligen Erfassungsprozess in einer der jeweiligen Anwendung angemessenen verzugsarmen Echtzeit,
- Archivierung von Gülleerfassungsdaten und/oder Prozessinformationen,
- Überwachung, Korrektur und Optimierung des jeweiligen Erfassungsprozesses in einer der jeweiligen Anwendung angemessenen verzugsarmen Echtzeit,
- dynamische Anpassung einer Gülle-Erfassungstour (aufnehmerseitige und abgeberseitige Gülleaufbringung, Gülleverbringung), Einrichtung von Sonderrouten und Abweichungen von offiziellen Wegen, jeweils in einer der jeweiligen Anwendung angemessenen verzugsarmen Echtzeit,

- Auswertung von Gülleerfassungsdaten und/oder Prozessinformationen zur vorausschauenden Wartung von Verschleißkomponenten des Erfassungssystems und/oder vorausschauenden Ersatzteilbestellung für dasselbe.

Die konkrete Ausgestaltung dieser Maßnahmen stellt sich beispielhaft, wie folgt, dar: Das Anwenderprogramm, beispielsweise die AgrarMap, beinhaltet nicht nur eine geografische Karte bzw. eine Navigationshilfe, sondern vor allem ein Informationssystem, das alle zur Verfügung stehenden Daten zugänglich und nutzbar macht und somit ein Werkzeug zur Datensammlung und zur Vernetzung von Abgeber bzw. Landwirt, Aufnehmer bzw. Landwirt, Fahrer des Gülle-Tankfahrzeugs, Fuhrunternehmen und ggf. Biogasanlage.

Die AgrarMap bietet zunächst ein sogenanntes "Live Tracking" für jedes Gülle-Tankfahrzeug. Auf einer zum Beispiel auf "Open Street Map" basierenden geografischen Karte, die zur besseren Übersicht beispielsweise mit "Google Maps" oder anderen Kartensystemen unterlegt werden kann, werden die genauen Positionen aller im Moment auf der Erfassungstour befindlichen Gülle-Tankfahrzeuge (GTF) in einer der jeweiligen Anwendung angemessenen verzugsarmen Echtzeit angezeigt. Mit einem Klick lassen sich weitere Informationen bereitstellen, beispielsweise unter folgenden Fragestellungen, deren Aufzählung nicht vollzählig ist:

- Wo fährt das GTF als nächstes hin?

- Wo kommt das GTF her?

- Welche Strecken hat das GTF hinter oder noch vor sich?

- Wie viel und welche Gülle ist in den Tankkammern?

- Wer fährt?

Das sogenannte "Navigations-Tool" von AgrarMap arbeitet mit dynamischer Routenanpassung in Echtzeit. Sonderrouten und Abweichungen von offiziellen Wegen lassen sich jederzeit anlegen für den Fall, dass sich Straßenverhältnisse durch Wetter oder beispielsweise. Baumaßnahmen ändern. Diese Änderungen können während einer jeden Gülle-Erfassungstour erfolgen und dem Fahrer sofort in einer der jeweiligen Anwendung angemessenen verzugsarmen Echtzeit zur Verfügung gestellt werden.

AgrarMap bietet auch eine Unterstützung bei der Fahrer-Einarbeitung durch detaillierte und individuelle Checklisten und Informationen je Abgeber- und Aufnehmerstelle und Biogasanlage, die sogar mit Fotos oder Videos der vor-Ort-Situation hinterlegt werden können. Nebenbei kann in Pannen- oder Unfallsituationen für schnelle Hilfe gesorgt werden, etwa indem in der Nähe befindliche Gülle-Tankfahrzeuge an das defekte Fahrzeug zwecks Abpumpen der Gülle herangeführt oder Reparaturen direkt am Fahrzeug bzw. das Abschleppen veranlasst werden.

Durch eine automatisierte Verschleißerkennung an einschlägig bekannten Bauteilen und Aggregationen des Gülle-Tankfahrzeugs kann die AgrarMap dafür Sorge tragen, dass vorausschauend diesbezügliche Ersatzteile automatisch bestellt werden; jedenfalls immer dann, sobald ein Defekt vorliegt. Eine digitale Tourenzusammenfassung einschließlich beispielsweise einer Übersicht über Dauer, Güllemenge, Gülleart und maßgebliche Nährstoffkonzentration und Zwischenfälle vervollständigen das Bild für den oder die Betreiber der Güllelieferkette.

Quasi als Nebenprodukt liefert die AgrarMap auch digitale Checklisten zur einfachen Aufdeckung und Dokumentation wiederkehrender Probleme im Alltag der Gülleerfassung, -verbringung und -aufbringung.

Die der Erfindung zugrundeliegende Aufgabe wird verfahrenstechnisch durch die Merkmale des einteiligen Nebenanspruchs 16 gelöst, wobei die vorstehenden Anmerkungen zur optional erweiterbaren Basisversion des digital vernetzten Erfassungssystems für Gülle auch für das erfindungsgemäße Verfahren gelten. Das Verfahren zur Erfassung von Gülle in einem digital vernetzten Erfassungssystem für Gülle, wobei das Erfassungssystem für Gülle eine Güllelieferkette bildet, wird in folgenden Schritten durchgeführt:

- wenigstens eine Abgeberstelle für Gülle und ein jeweils zugeordneter Abgeber stellen eine abgeberseitige Güllemenge und zur Dokumentation zugeordnete, geforderte abgeberseitige Daten bereit,
- wenigstens eine Aufnehmerstelle für Gülle und ein jeweils zugeordneter Aufnehmer stellen zur Dokumentation zugeordnete, geforderte aufnehmerseitige Daten bereit,
- wenigstens ein Gülle-Tankfahrzeug mit einem zugeordneten Fahrer und/oder Fuhrunternehmen werden zur Aufnahme, zum Transport und zur Abgabe der Gülle bereitgestellt, wobei das Gülle-Tankfahrzeug

  ◦ im Verlauf einer vorgegebenen Gülle-Erfassungstour die Gülle aus wenigstens einem Abgebertank der wenigstens einen Abgeberstelle in einen Güllebehälter des Gülle-Tankfahrzeugs überführt,

◦ die aufgenommene Gülle zu einer Aufbringfläche der wenigstens einen Abgeberstelle und/oder der wenigstens einen Aufnehmerstelle transportiert und dort aufbringt,

◦ im Verlauf der Aufbringung der Gülle die strömende Gülle auf ihre maßgebliche Nährstoffkonzentration hin kontinuierlich analysiert und das jeweilige Analyseergebnis der jeweils übernommenen Güllemenge, die ebenfalls fahrzeugseitig kontinuierlich mengenmäßig erfasst wird, zwecks Durchführung einer repräsentativen Probenahme der strömenden Gülle (G) zuordnet,

- für die jeweilige Aufbringfläche wird eine zulässige flächenbezogene Nährstoffgabe vorgegeben,
- die Ausbringung der Gülle durch das Gülle-Tankfahrzeug auf die jeweilige Aufbringfläche wird derart gesteuert, dass die zugeordnete zulässige flächenbezogene Nährstoffgabe in Abhängigkeit von der zeitnah ermittelten Nährstoffkonzentration eingehalten wird,
- entsprechende fahrzeugseitige Daten werden zur Dokumentation bereitstellt,
- im Verlauf der Übernahme der abgeberseitigen Güllemengen in den fahrzeugseitigen Güllebehälter wird die jeweilige strömende Gülle auf ihre maßgebliche Nährstoffkonzentration hin kontinuierlich analysiert und das jeweilige Analyseergebnis wird der jeweiligen abgeberseitigen Güllemenge, die ebenfalls fahrzeugseitig mengenmäßig erfasst wird, zwecks Durchführung einer repräsentativen Probenahme der strömenden Gülle zugeordnet,
- die in einer abgeberstellenseitigen, aufnehmerstellenseitigen und fahrzeugseitigen Datenübertragungseinrichtung bereitgestellten abgeberseitigen, aufnehmerseitigen und fahrzeugseitigen Daten werden jeweils in einer der jeweiligen Anwendung angemessenen verzugsarmen Echtzeit mittels eines Datennetzwerks und über eine zugeordnete webbasierte abgeberstellenseitigen, aufnehmerstellenseitigen und fahrzeugseitigen Datenverbindung an wenigstens einen Prozessor übermittelt, dort verarbeitet und in wenigstens einem Datenspeicher abgelegt und von dort von der abgeberstellenseitigen, aufnehmerstellenseitigen und fahrzeugseitigen Datenübertragungseinrichtung empfangen,
- eine abgeberstellenseitige, aufnehmerstellenseitige, abgeberseitige, aufnehmerseitige und fahrer- und/oder fuhrunternehmerseitige Fernsteuerungseinrichtung sendet Daten mittels des Datennetzwerks über die zugeordnete webbasierte abgeberstellenseitigen, aufnehmerstellenseitigen sowie eine webbasiert abgeberseitige, aufnehmerseitige und fahrer- und/oder fuhrunternehmerseitige Datenverbindung an den wenigstens einen Prozessor (110) in Verbindung mit dem wenigstens einen Datenspeicher und/oder empfängt entsprechende Daten von diesen.

Die Erfindung sieht weiterhin verfahrenstechnisch vor, dass optional und zusätzlich wenigstens eine Abnehmerstelle als Biogasanlage fungiert, die so eingerichtet ist, dass sie ein im Biogas-Prozess beim Einsatz von Gülle anfallendes Substrat sammelt und zur Abgabe zusammen mit zugeordneten anlagenseitigen Daten bereitstellt. Im Rahmen einer Gülleverbringung durch das Gülle-Tankfahrzeug wird Gülle in die Biogasanlage geliefert und diese Lieferung durch die zugeordneten fahrzeugseitige Daten dokumentiert. Darüber hinaus weist die wenigstens eine Biogasanlage eine anlagenseitige Datenübertragungseinrichtung auf und in oder im Bereich der wenigstens einen Biogasanlage ist jeweils wenigstens eine anlagenseitige Fernsteuereinrichtung vorgesehen. Die Datenhandhabung in der Biogasanlage über die anlagenseitige Datenübertragungseinrichtung und die anlagenseitige Fernsteuerungseinrichtung erfolgt analog beispielsweise zu jener in der Abgabestelle.

Die webbasierte Datenübertragung im erfindungsgemäßen Datennetzwerk erfolgt im Web oder Ethernet oder Intranet oder Internet.

Die abgeberseitigen, aufnehmerseitigen, fahrzeugseitigen und anlagenseitigen Daten werden bevorzugt auf dem Datenspeicher in einer geschlossenen Daten-Cloud und/oder auf einem Datenspeicher einer zuständigen Kontrollbehörde gespeichert.

Bei mangelnder Konnektivität im Datennetzwerk ist es verfahrens- und sicherheitstechnisch angeraten, wenn die abgeberseitigen, aufnehmerseitigen, fahrzeugseitigen und anlagenseitigen Daten jeweils zwischengespeichert werden, bis zu einem späteren Zeitpunkt eine Netzverbindung wieder vorliegt.

Hinsichtlich der durch die Fernsteuerungseinrichtungen über das im digital vernetzten Erfassungssystem hinterlegten Anwenderprogramm (z.B. AgrarMap) abrufbaren verfahrenstechnischen Maßnahmen wird, um Wiederholungen zu vermeiden, auf die diesbezüglichen Ausführungen zum digital vernetzten Erfassungssystem verwiesen.

KURZBESCHREIBUNG DER ZEICHNUNGEN

Eine eingehendere Darstellung der Erfindung ergibt sich aus der folgenden Beschreibung und den beigefügten Figuren der Zeichnung sowie aus den Ansprüchen. Während die Erfindung in den verschiedensten Ausführungsformen eines digital vernetzten Erfassungssystems für Gülle und zwei Ausgestaltungen eines Verfahrens realisiert ist, wird nachfolgend anhand der Zeichnung ein bevorzugtes Ausführungsbeispiel des erfindungsgemäßen Erfassungssystems und des erfindungsgemäßen Verfahrens beschrieben. Es zeigen

**Figur 1**  ein Blockschaltbild eines Ausführungsbeispiels eines erfindungsgemäß digital vernetzten Erfassungssystems für Gülle;

**Figur 2**  in schematischer Darstellung das Ausführungsbeispiel des digital vernetzten Erfassungssystems für Gülle gemäß **Figur 1;**

**Figur 3**  in schematischer Darstellung einen Ausschnitt aus **Figur 2** in vergrößerter Darstellung, der ein Gülle-Tankfahrzeug mit weiteren Einzelheiten und Informationen zeigt und

**Figur 4**  ein Blockschaltbild einer geschlossenen Daten-Cloud im Rahmen eines Datennetzwerks gemäß den **Figuren 1** und **2.**

## Digital vernetztes Erfassungssystem für Gülle

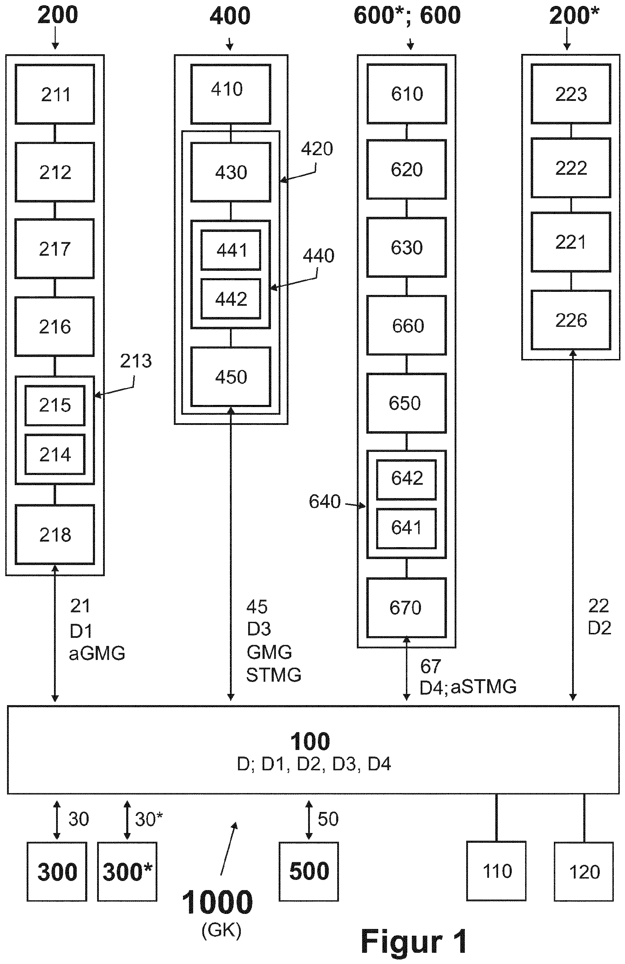

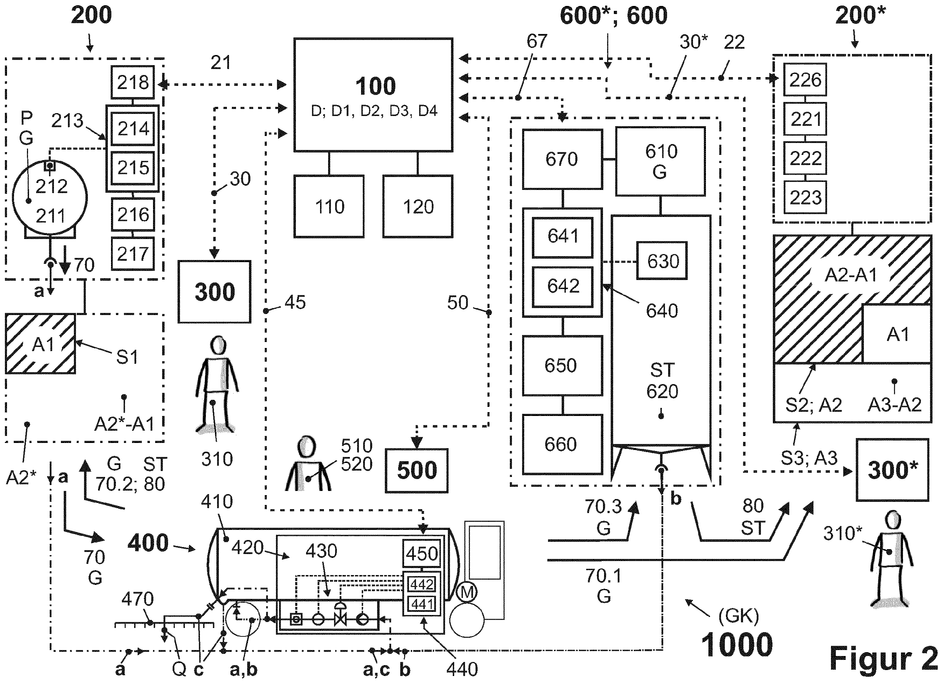

Ein digital vernetztes Erfassungssystem für Gülle 1000 im Rahmen einer sogenannten Güllelieferkette GK **(Figuren 1, 2)** weist quasi als zentrales Element ein Datennetzwerk 100 auf, das datenleitend mit wenigstens einem Prozessor 110 und wenigstens einem Datenspeicher 120 verbunden ist. Weitere Elemente sind wenigstens eine Abgeberstelle 200, wenigstens eine Aufnehmerstelle 200*, wenigstens ein Gülle-Tankfahrzeug 400 und optional und zusätzlich wenigstens eine Abnehmerstelle 600*, die als eine Biogasanlage 600 fungiert.

Die wenigstens eine Abgeberstelle 200 für Gülle G besteht, soweit es im Rahmen des vorliegenden Anmeldungsgegenstandes relevant ist, aus wenigstens einem Abgebertank 211, einer abgeberstellenseitigen Sensoreinrichtung 212, einer abgeberstellenseitigen Steuerungseinrichtung 213, die wiederum wenigstens einen abgeberstellenseitigen Prozessor 214 und wenigstens einen abgeberstellenseitigen Datenspeicher 215 beherbergt, einem abgeberstellenseitigen Datennetzwerk 216, einer abgeberstellenseitigen Fernsteuerungseinrichtung 217 und einer abgeberstellenseitigen Datenübertragungseinrichtung 218. Alle vorgenannten abgeberstellenseitigen Komponenten sind datenleitend miteinander verbunden. Weitere Abgeberstellen können identisch oder auch abweichend konfiguriert sein. Wesentlich ist, dass vom jeweiligen geltenden Düngerecht geforderte abgeberseitige Daten D1, die wenigstens aus abgeberstellenseitigen Güllemessgrößen aGMG an der Abgeberstelle 200 bereitgestellt und beispielsweise wenigstens, zumindest bisher, in einem Lieferschein dokumentiert werden. Zur digitalen Weiterverarbeitung werden diese abgeberseitigen Daten D1 über die abgeberstellenseitige Fernsteuerungseinrichtung 217 beispielsweise manuell eingegeben oder über einen geeigneten Datenträger eingelesen, über das abgeberstellenseitige Datennetzwerk 216 an die abgeberstellenseitige Datenübertragungseinrichtung 218 übermittelt und über eine webbasierte abgeberstellenseitige Datenverbindung 21 in das Datennetzwerk 100 in einer der jeweiligen Anwendung angemessenen verzugsarmen Echtzeit übertragen oder relevante Gülledaten D werden aus dem Datennetzwerk 100 empfangen.

Die wenigstens eine Aufnehmerstelle 200* für Gülle G besteht, soweit es im Rahmen des vorliegenden Anmeldungsgegenstandes relevant ist, aus wenigstens einem aufnehmerstellenseitigen Datenspeicher 221, einem aufnehmerstellenseitigen Datennetzwerk 222, einer aufnehmerstellenseitigen Fernsteuerungseinrichtung 223 und einer aufnehmerstellenseitigen Datenübertragungseinrichtung 226. Alle vorgenannten aufnehmerstellenseitigen Komponenten sind datenleitend miteinander verbunden. Weitere Aufnehmerstellen können identisch oder auch abweichend konfiguriert sein. Wesentlich ist, dass vom jeweiligen geltenden Düngerecht geforderte aufnehmerseitige Daten D2 an der Aufnehmerstelle 200* bereitgestellt und beispielsweise wenigstens in einem Lieferschein dokumentiert werden. Zur digitalen Weiterverarbeitung werden diese aufnehmerseitigen Daten D2 über die aufnehmerstellenseitige Fernsteuerungseinrichtung 223 beispielsweise manuell eingegeben oder über einen geeigneten Datenträger eingelesen, über das aufnehmerstellenseitige Datennetzwerk 222 an die aufnehmerstellenseitige Datenübertragungseinrichtung 223 übermittelt und über eine webbasierte aufnehmerstellenseitige Datenverbindung 22 in das Datennetzwerk 100 in einer der jeweiligen Anwendung angemessenen verzugsarmen Echtzeit übertragen oder relevante Gülledaten D werden aus dem Datennetzwerk 100 empfangen.

Die Aufnehmerstelle 200* verfügt im vorliegenden Ausführungsbeispiel über einen aufnehmerstellenseitigen Schlag S3, unter dem im vorliegenden Beispiel eine landwirtschaftliche maximal verfügbare aufnehmerstellenseitige Aufbringfläche A3 zu verstehen ist, auf die nach dem geltenden und anwendbaren Düngerecht bzw. der Düngeverordnung Gülle G unter bestimmten verpflichtenden Kriterien aufgebracht werden kann. Das gewählte Ausführungsbeispiel soll verdeutlichen, dass die maximal verfügbare aufnehmerstellenseitige Aufbringfläche A3 deutlich größer als eine abgeberstellenseitige Aufbringfläche A1 eines abgeberstellenseitigen Schlags S1 ist.

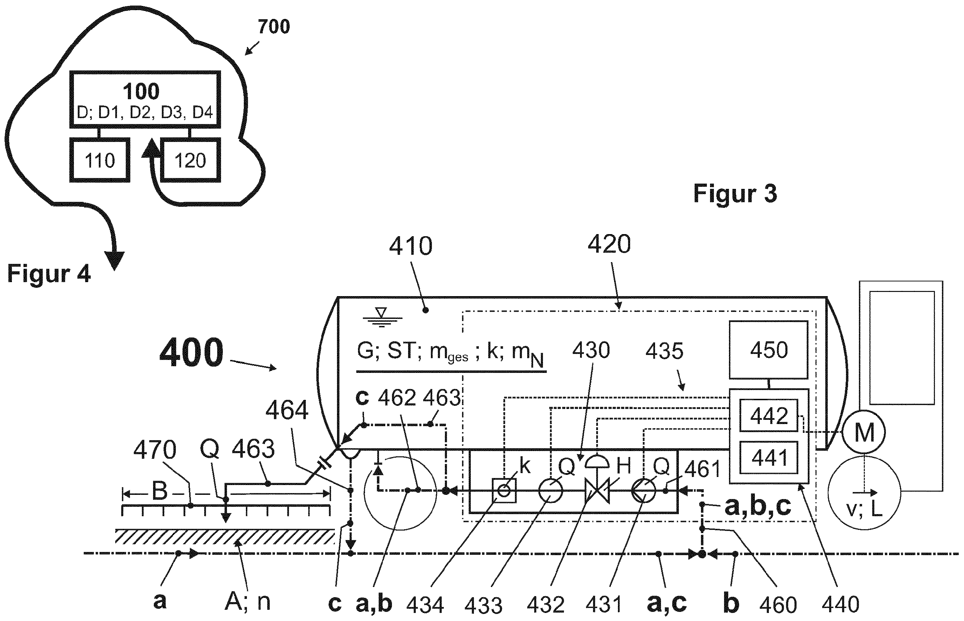

Das wenigstens eine Gülle-Tankfahrzeug 400 **(Figuren 2, 3)** besteht, soweit es im Rahmen des vorliegenden Anmeldungsgegenstandes relevant ist, aus einem fahrzeugseitigen Güllebehälter 410 für die Aufnahme von Gülle G und einem fahrzeugseitigen Annahme- und Abgabesystem 420 für Gülle G, das eine fahrzeugseitige Messanlage 430 aufnimmt mit einer fahrzeugseitigen Steuerungseinrichtung 440, die wiederum einen fahrzeugseitigen Prozessor 441 und einen fahrzeugseitigen Datenspeicher 442 beherbergt und ihrerseits mit einer fahrzeugseitigen Datenübertragungseinrichtung 450 in datenleitender Verbindung steht. Die fahrzeugseitige Messanlage 430 besitzt, in Strömungsrichtung eines die Messanlage 430 über eine fahrzeugseitige Messleitung 461 durchsetzenden Güllestroms Q gesehen, wenigstens eine fahrzeugseitige Güllepumpe 431 in Verbindung mit einem fahrzeugseitigen Stellventil 432 oder eine regelbare fahrzeugseitige Güllepumpe 431 allein, wenigstens einen fahrzeugseitigen Durchflussmesser 433, der ein Volumen- oder Massendurchflussmesser ist, und wenigstens einen Güllesensor 434, der vorzugsweise als Nah-Infrarot-Sensor (NIRS) ausgebildet ist. Die vorstehend genannten Komponenten der Messanlage 430 sind über fahrzeugseitige Datenübertragungsleitungen 435 mit der fahrzeugseitigen Steuerungseinrichtung 440 verbunden.

Die fahrzeugseitige Güllepumpe 431 fördert in einer bevorzugten Ausführungsform den Güllestrom Q gegen das fahrzeugseitige Stellventil 432, dessen Hublage H durch die fahrzeugseitige Steuerungseinrichtung 440 gesteuert wird. Die Regelung des Güllestroms Q kann alternativ auch allein durch eine im Durchfluss regelbare Güllepumpe 431, vorzugsweise eine rotierende Verdrängerpumpe, erfolgen. Der fahrzeugseitige Durchflussmesser 433 ist so eingerichtet, dass er den Massenstrom des Güllestroms Q entweder vorzugsweise unmittelbar oder mittelbar, bei Kenntnis der Dichte der Gülle G, über den Volumenstrom ermittelt. Der vorzugsweise als NIR-Sensor ausgebildete fahrzeugseitige Güllesensor 434 misst eine maßgebliche Nährstoffkonzentration k des Güllestroms Q, wobei durch das jeweils geltende Düngerecht festgelegt ist, welche der vielfältigen in Wirtschaftsdüngern (Gülle G, Substrat ST aus der Biogasanlage 600) enthaltenen Nährstoffe N maßgeblich und als solche zu analysieren sind.

Ein Antriebsmotor M des Gülle-Tankfahrzeugs 400 ist gleichfalls mit der fahrzeugseitigen Steuerungseinrichtung 440 datenleitend verbunden, wodurch eine Vorfahrgeschwindigkeit v des Gülle-Tankfahrzeugs 400 durch die Steuerungseinrichtung 440 verändert wird.

Die fahrzeugseitige Messleitung 461 ist eingangsseitig mit einer fahrzeugseitigen Zuflussleitung 460 für Gülle G verbunden und ausgangsseitig verzweigt sich die Messleitung 461 in eine fahrzeugseitige Füllleitung 462 und in eine fahrzeugseitige Abgabeleitung 463 für Gülle G. Die Entleerung des Güllebehälters 410 erfolgt über eine fahrzeugseitige Entleerungsleitung 464, die mit der Zuflussleitung 460 verbunden ist. Ein abgeberstellenseitiger Fließweg a kennzeichnet den Strömungsweg der Gülle G vom Abgebertank 211 bis in einen Innenraum des Güllebehälters 410, ein anlagenseitiger Fließweg b kennzeichnet den Strömungsweg des Substrats ST von einem Substratbehälter 620 der Biogasanlage 600 ebenfalls bis in den Innenraum des Güllebehälters 410. Ein fahrzeugseitiger Abgabeweg c kennzeichnet den Strömungsweg für Gülle G oder Substrat ST aus dem Innenraum des Güllebehälters 410 über die fahrzeugseitige Messanlage 430 bis zu einer vorzugsweise am Heck des Gülle-Tankfahrzeugs 400 angeordneten Ausbringvorrichtung 470.

Durch diese beispielhaft ausgeführte Verrohrung kann sowohl die vom fahrzeugseitigen Güllebehälter 410 aufzunehmende als auch die von diesem abzugebende Gülle G über dieselbe Messanlage 430 mengenmäßig und hinsichtlich einer jeweils zugeordneten maßgeblichen Nährstoffkonzentration k, $k_i$, $k_m$ (beispielsweise in [g/kg]) repräsentativ erfasst werden, wobei k für die maßgeblich Nährstoffkonzentration allgemein, $k_i$ für eine abgeberseitige maßgebliche Nährstoffkonzentration einer zugeordneten abgeberseitigen Güllemenge $m_i$ (beispielsweise in [kg]) und $k_m$ für den repräsentativen Durchschnittswert einer maßgeblichen Nährstoffkonzentration einer zugeordneten Güllegesamtmenge $m_{ges}$ steht. Abgeberseitige Güllemengen $m_i$ werden nach Überführung in den fahrzeugseitigen Güllebehälter 410 zu entsprechenden fahrzeugseitigen Güllemengen $m_i$.

Die fahrzeugseitige Ausgabeleitung 463 ist mit der Ausbringvorrichtung 470, die vorzugsweise eine variable Ausbringbreite B aufweist, verbunden. Über die Ausbringvorrichtung 470 wird der Güllestrom Q auf eine erforderliche Aufbringfläche A, die eine düngerechtlich vorgegebene zulässige flächenbezogene Nährstoffgabe n (beispielsweise in [g/m$^2$]) erlaubt, aufgebracht. Der Güllebehälter 410 kann auch Substrat ST aus einer Biogasanlage 600 aufnehmen. Er bevorratet die Güllegesamtmenge $m_{ges}$, die sich aus mehreren (beispielsweise einer Anzahl x) abgeberseitigen Gülle- mengen $m_i$ nach Gleichung (1) zusammensetzt:

$$m_{ges} = \sum_{i=1}^{x} m_i \qquad\qquad (1)$$

**Ausbringung der Gülle**

Für die Aufbringung einer bestimmten Ausbringmenge Gülle m (z.B. in [kg]), die der vorgenannten Güllegesamtmenge $m_{ges}$ oder einer abgeberseitigen bzw. fahrzeugseitigen Güllemenge $m_i$ entsprechen kann, auf eine erforderliche Aufbringfläche A (z.B. in [m$^2$]) sind folgende Einflussgrößen mit beispielhaft gewählten zueinander kohärenten Maßeinheiten heranzuziehen:

- Ausbringweg L (z.B. in [m])
- Ausbringbreite B (z.B. in [m])
- Güllestrom Q (z.B. in [kg/s])
- maßgebliche Nährstoffkonzentration k (z.B. in [g/kg]),
- zulässige flächenbezogene Nährstoffgabe n (z.B. in [g/m$^2$])
- Zeitdauer für die Ausbringung ta (z.B. in [s]),

- Vorfahrgeschwindigkeit v (z.B. in [m/s])

Beim Güllestrom Q und/oder bei der maßgeblichen Nährstoffkonzentration k, $k_i$ kann es sich jeweils um eine zeitlich unveränderliche, d.h. konstante Größe, aber auch um eine von der Zeit t abhängige Größe handeln (Q(t); k(t), $k_i$(t)). Bei den zeitabhängigen Größen sind eine repräsentative Probenahme und eine repräsentative Analyse der auszubringenden oder zu überführenden Gülle im Sinne der vorliegenden Erfindung von besonderer Bedeutung.

Für näherungsweise konstante Größen gelten die nachfolgenden Beziehungen (Gleichungen (2) bis (5)):

$$m, m_i, m_{ges} = Q\ ta \qquad (2)$$

$$L = v\ ta \qquad (3)$$

$$A = m\ k/n \qquad (4)$$

$$A = B\ L \qquad (5)$$

Vorgegebenen Einflussgrößen sind in der Regel die Größen B, m und n, zu messende Größen sind k und Q, eine einstellbare Größe ist ggf. v. Die Größen L und ta stehen in Abhängigkeit zu den übrigen Größen und sind in der Regel nicht von explizitem Interesse. Das vorstehende Gleichungssystem (2) bis (5) kann nun nach jeder interessierenden Größe in Abhängigkeit von anderen Größen aufgelöst werden:

Falls die Vorfahrgeschwindigkeit v von Interesse ist, ergibt sich nach Gleichung (6):

$$v = \frac{Q\ k}{B\ n} \qquad (6)$$

Die Vorfahrgeschwindigkeit ist demnach linear proportional zur Größe des Güllestroms Q und der maßgeblich Nährstoffkonzentration k und umgekehrt linear proportional zur Ausbringbreite B und der flächenbezogenen zulässigen Nährstoffgabe n.

Falls die erforderliche Aufbringfläche A gesucht ist, ergibt sich nach der vorstehenden Gleichung (4):

$$A = \frac{m\ k}{n} \qquad (4)$$

**Übernahme der Gülle**

Für die Übernahme einer bestimmten fahrzeugseitigen Güllegesamtmenge $m_{ges}$ der Gülle G (z.B. in [kg]) aus dem Abgebertank 211 in den fahrzeugseitigen Güllebehälter 410, die der vorgenannten abgeberseitigen bzw. fahrzeugseitigen Güllemenge $m_i$ entsprechen kann, sind folgende Einflussgrößen mit beispielhaft gewählten zueinander kohärenten Maßeinheiten heranzuziehen:

- Güllestrom Q oder Q(t) (z.B. in [kg/s])
- maßgebliche Nährstoffkonzentration k oder k(t) (z.B. in [g/kg]),
- Zeitdauer der Übernahme tü (z.B. in [s]),

Die Frage einer repräsentativen Probenahme bzw. Analyse der Gülle G wurde vorstehend bereits thematisiert. Um die für die weitere Verwendung der Gülle G (z.B. Ausbringung auf Aufbringflächen) erforderlichen Daten zu gewinnen, wird erfindungsgemäß eine in der zu übernehmenden Gülle G zur Verfügung stehende Nährstoffmenge $m_N$ [z.B. in kg] bereits im Verlauf der Überführung durch repräsentative Probenahme und repräsentative Analyse aus dem im allgemeinsten Falle zeitabhängigen Güllestrom Q(t) und der jeweiligen zugeordneten zeitabhängigen maßgeblichen Nährstoffkonzentration k(t) ermittelt, und zwar über Gleichung (7) in einer Zeitdauer für die Überführung tü mit einer Abfolge von differenziellen Zeitspannen $\Delta t$, die im Grenzfall zu einer infinitesimalen Zeitspanne dt werden können:

$$m_N = \sum_{t=0}^{t=t\ddot{u};\,ta} k(t)Q(t)\Delta t \qquad\qquad (7)$$

Gleichung (7) kann gleichermaßen auch für die Ausbringung der Gülle G mit der Zeitdauer für die Ausbringung ta Anwendung finden.

Die vorstehenden Beziehungen können in der fahrzeugseitigen Steuerungseinrichtung 440 hinterlegt und zur Steuerung der Aus- und Aufbringung der Gülle G herangezogen werden.

Das Gülle-Tankfahrzeug 400 kann auch anders konfiguriert sein. Wesentlich ist, dass die über das Gülle-Tankfahrzeug 400 ermittelten Gülleerfassungsdaten D, im allgemeinsten Falle fahrzeugseitige Daten D3, die wenigstens aus fahrzeugseitigen Gülle- oder Substratmessgrößen GMG, STMG bestehen können, zur digitalen Weiterverarbeitung an der fahrzeugseitigen Datenübertragungseinrichtung 450 bereitgestellt und über eine webbasierte fahrzeugseitige Datenverbindung 45 in das Datennetzwerk 100 in einer der jeweiligen Anwendung angemessenen verzugsarmen Echtzeit übertragen oder dass Daten aus dem Datennetzwerk 100 empfangen werden.

Die wenigstens eine Abnehmerstelle 600*, die eine Biogasanlage 600 sein kann, besteht, soweit es im Rahmen des vorliegenden Anmeldungsgegenstandes wiederum relevant ist, aus einer Biogas-Prozessanlage 610, dem Substratbehälter 620 mit einer anlagenseitigen Sensoreinrichtung 630, einer anlagenseitigen Steuerungseinrichtung 640, die wiederum wenigstens einen anlagenseitigen Prozessor 641 und wenigstens einen anlagenseitigen Datenspeicher 642 beherbergt, einem anlagenseitigen Datennetzwerk 650, einer anlagenseitigen Fernsteuerungseinrichtung 660 der vorstehend beispielhaft beschriebenen Art und einer anlagenseitigen Datenübertragungseinrichtung 670. Alle vorgenannten anlagenseitigen Komponenten sind datenleitend miteinander verbunden. Die Biogasanlage 600 kann auch anders konfiguriert sein. Wesentlich ist, dass in der Biogasanlage 600 ermittelte anlagenseitige Daten D4, die wenigstens aus anlagenseitigen Substratmessgrößen aSTMG bestehen können, zur digitalen Weiterverarbeitung an der anlagenseitigen Datenübertragungseinrichtung 670 bereitgestellt und über eine webbasierte anlagenseitige Datenverbindung 67 in das Datennetzwerk 100 in einer der jeweiligen Anwendung angemessenen verzugsarmen Echtzeit übertragen oder dass Daten vom Datennetzwerk 100 empfangen werden.

Die wenigsten eine Abgeberstelle 200 kann auf einer Gülle-Erfassungstour 70 nach einem Routenplan von dem wenigstens einen Gülle-Tankfahrzeug 400 angefahren werden, wobei die Übernahme von Gülle G aus dem zugeordneten Abgebertank 211 mit der Güllemenge $m_i$ in den Güllebehälter 410 über den abgeberstellenseitigen Fließweg a erfolgt.

Die Gülle-Erfassungstour 70 verbringt beispielhaft nach einer ersten Variante im Rahmen einer aufnehmerseitigen Gülleaufbringung 70.1 die Gülle G vollständig auf eine maximal notwendige aufnehmerstellenseitige Aufbringfläche A2, die mit S2 Teil des aufnehmerstellenseitigen Schlags S3 ist **(Figur 2),** der wenigstens einen Aufnehmerstelle 200*, wobei der aufnehmerseitige Schlag S3 eine maximal verfügbare aufnehmerstellenseitige Aufbringfläche A3 besitzt.

Eine zweite Variante sieht vor, die Gülle G im Rahmen einer Kombination aus der aufnehmerseitigen Gülleaufbringung 70.1 und einer abgeberseitigen Gülleaufbringung 70.2 zum einen Teil auf die abgeberstellenseitige Aufbringfläche A1 des abgeberstellenseitigen Schlags S1 und zum anderen Teil auf eine minimale aufnehmerstellenseitig genutzte Aufbringfläche A2 - A1 des aufnehmerstellenseitigen Schlags S3 aufzubringen. Diese einfache Aufteilung setzt allerdings voraus, dass die flächenbezogene zulässige Nährstoffgabe n für die Flächen A1 und A2 - A1 jeweils gleich sind. Ansonsten ist eine Flächenanpassung notwendig. Mit A2*, wobei A2* = A2 ist, ist eine abgeberstellenseitig erforderliche Aufbringfläche bezeichnet, um die von der zugeordneten Abgeberstelle 200 zu verbringende abgeberseitige Güllemenge $m_i$ konform mit den gesetzlichen Düngeregeln aufzubringen. Der abgeberseitige Schlag S1 muss nicht zwingend der Abgeberstelle 200, von der die aufzubringende Gülle G stammt, betriebsmäßig zugeordnet sein. Weiterhin sind optional und zusätzlich eine Gülleverbringung 70.3 in die wenigstens eine Biogasanlage 600 oder eine Substrataufnahme und -aufbringung 80 vorgesehen. Letztere vollzieht sich von der wenigstens einen Biogasanlage 600 beispielsweise zum aufnehmerseitigen Schlag S3.

In viehstarken Regionen existiert die vorgenannte Problematik, die durch Verbringung der Gülle G in viehschwache Regionen, wie durch die vorstehende aufnehmerseitige Gülleaufbringung 70.1 gezeigt, nach heutigem Stand gelöst wird. Weiterhin wird offensichtlich, dass unter diesen Gegebenheiten die notwendigen Nährstoffbewegungen mit den herkömmlichen Dokumentations- und Kommunikationsmitteln nur mit einem hohen Zeitaufwand und mit geringer Fehlersicherheit zu bewältigen sind.

Das digital vernetzte Erfassungssystem für Gülle 1000 weist in dem wenigstens einen Gülle-Tankfahrzeug 400 jeweils wenigstens eine fahrerseitige Fernsteuerungseinrichtung 500 der vorbeschriebenen Art (z.B. Tablett) für einen zugeordneten Fahrer 510 und/oder in einem zugeordneten Fuhrunternehmen 520 eine fuhrunternehmerseitige Fernsteuerungseinrichtung 500 auf **(Figuren 2, 1).** Die Fernsteuerungseinrichtung 500 ist über eine webbasierte fahrer- und/oder fuhrunternehmerseitige Datenverbindung 50 mit dem Datennetzwerk 100 datenleitend verbunden.

An oder im Bereich der wenigstens einen Abgeberstelle 200 ist eine abgeberseitige Fernsteuerungseinrichtung 300 der vorbeschriebenen Art für einen zugeordneten Abgeber 310 vorgesehen. Die abgeberseitige Fernsteuerungseinrichtung 300 ist über eine webbasierte abgeberseitige Datenverbindung 30 mit dem Datennetzwerk 100 datenleitend verbunden.

An oder im Bereich der wenigstens einen Aufnehmerstelle 200* ist eine aufnehmerseitige Fernsteuerungseinrichtung 300* der vorbeschriebenen Art für einen zugeordneten Aufnehmer 310* vorgesehen. Die aufnehmerseitige Fernsteuerungseinrichtung 300* ist über eine webbasierte aufnehmerseitige Datenverbindung 30* mit dem Datennetzwerk 100 datenleitend verbunden.

Der vorstehende Aufbau des digital vernetzten Erfassungssystems für Gülle 1000 wird nachfolgend in seiner Funktion noch ergänzend erläutert **(Figuren 1, 2, 3).** In an sich bekannter Weise ist die Abgeberstelle 200 so eingerichtet, dass der wenigstens eine Abgebertank 211 die in diesem bevorratete abgeberseitige Güllemenge $m_i$ zur Abholung bereitstellt. Zu dieser Güllemenge $m_i$ können weitere Daten ermittelt werden, beispielsweise die zugeordneten abgeberstellenseitigen Güllemessgrößen aGMG, beispielsweise eine aus einer Mischprobe über mehrere Gülle-Handproben P labormäßig ermittelte maßgebliche Nährstoffkonzentration $k_i$ und eine Temperatur. Diese und andere von der jeweiligen Düngeverordnung geforderte Daten werden in Form von abgeberseitigen Daten D1 zur digitalen Weiterverarbeitung bereitgestellt.

Das wenigstens eine Gülle-Tankfahrzeug 400 ist so eingerichtet, dass dieses die in dem wenigstens einen Abgebertank 211 bereitgestellte Güllemenge $m_i$ oder auch nur Teilmengen davon in den fahrzeugseitigen Güllebehälter 410 überführt und im Zuge der Überführung diese Güllemenge $m_i$ mengenmäßig und hinsichtlich der zugeordneten maßgeblichen Nährstoffkonzentration $k_i$ jeweils quantitativ repräsentativ und jeweils durch Messung im Güllestrom Q erfasst. Weiterhin werden diesen fahrzeugseitigen Güllemessgrößen GMG andere Daten, wie Temperatur, Art der Gülle, Tag, Uhrzeit, Abgeberstelle bzw. GPS-Daten hinzugefügt. Diese Daten werden in Form von fahrzeugseitigen Daten D3 zur digitalen Weiterverarbeitung bereitstellt.

Die Aufnehmerstelle 200* ist so eingerichtet, dass sie die notwendigen aufnehmerseitigen Daten D2 zur regelkonformen Aufbringung der Gülle auf die maximal verfügbare aufnehmerstellenseitige Aufbringfläche A3 des aufnehmerseitigen Schlags S3 zur digitalen Weiterverarbeitung über die aufnehmerstellenseitige Datenübertragungseinrichtung 226 bereitgestellt.

Die wenigstens eine Biogasanlage 600 ist einerseits so eingerichtet, dass diese die von dem wenigstens einen Gülle-Tankfahrzeug 400 durch die Gülleverbringung 70.3 angelieferte Güllegesamtmenge $m_{ges}$ in dem Substratbehälter 620 aufnimmt und diese Menge dokumentiert und in Form von anlagenseitigen Daten D4 zur digitalen Weiterverarbeitung über die anlagenseitige Datenübertragungseinrichtung 670 bereitstellt. Das bei dem Biogas-Prozess anfallende Substrat ST wird im Rahmen der Substrataufnahme und -aufbringung 80 in gleicher Weise in Gestalt der anlagenseitigen Substratmessgrößen aSTMG erfasst und diese Daten werden zusammen mit anderen der Biogasanlage 600 zugeordneten und geforderten Parameter zur digitalen Weiterbehandlung bereitstellt.

Ausgehend von den beschriebenen systemtechnischen Merkmalen des erfindungsgemäßen digital vernetzten Erfassungssystems für Gülle G besteht die Lehre der Erfindung weiterhin darin, die an der jeweiligen Datenübertragungseinrichtung 218, 226, 450 und 670 bereitgestellten Gülleerfassungsdaten D, nämlich die abgeberstellen-, die aufnehmerstellen-, die fahrzeug- und die anlagenseitigen Daten D1, D2, D3, D4, in einer der jeweiligen Anwendung angemessenen verzugsarmen Echtzeit drahtlos an das Datennetzwerk 100 zu senden und/oder von diesem zu empfangen. Weiterhin stellt die Erfindung sicher, dass über die jeweilige Fernsteuerungseinrichtung 217, 300, 223, 300*, 500, 660), nämlich die abgeberstellen-, die abgeber-, die aufnehmerstellen-, die aufnehmer-, die fahrer- und/oder fuhrunternehmerseitige Fernsteuerungseinrichtung, jederzeit ein autorisierter Zugriff auf alle Daten, Prozesse und Zustände im Datennetzwerk 100 und damit in den mit dem Datennetzwerk 100 datenleitend verbundenen Gliedern der Güllelieferkette GK gegeben ist. Die erwähnte Zugriffsmöglichkeit schließt eine diesbezügliche, autorisierte Einfluss- und Steuerungsmöglichkeit mit ein. Zugriff, Einfluss und Steuerung durch die Akteure in der Güllelieferkette GK erfolgt durch Anwenderprogramme im Bereich des Gülle Tankfahrzeugs 400 und ggf. der anderen Glieder der Güllelieferkette GK, wobei diese Anwenderprogramme an geeigneter Stelle im Datennetzwerk 100 implementiert sind und wobei der vorstehend erwähnten AgrarMap eine übergeordnete Funktion zukommt.

**Verfahren zur Erfassung von Gülle in einem digital vernetzten Erfassungssystem**

Das erfindungsgemäße Verfahren wird in folgenden Schritten durchgeführt:

- Wenigstens eine Abgeberstelle 200 für Gülle G und ein jeweils zugeordneter Abgeber 310 stellen eine abgeberseitige Güllemenge $m_i$ und zur Dokumentation zugeordnete, geforderte abgeberseitige Daten D1 bereit.
- Wenigstens eine Aufnehmerstelle 200* für Gülle G und ein jeweils zugeordneter Aufnehmer 310* stellen zur Dokumentation zugeordnete, geforderte aufnehmerseitige Daten D2 bereit.
- Wenigstens ein Gülle-Tankfahrzeug 400 mit einem zugeordneten Fahrer 510 und/oder Fuhrunternehmen 520 werden zur Aufnahme, zum Transport und zur Abgabe der Gülle G bereitgestellt.
Das Gülle-Tankfahrzeug 400

> ∘ überführt im Verlauf einer vorgegebenen Gülle-Erfassungstour 70 die Gülle G aus wenigstens einem Abgebertank 211 der wenigstens einen Abgeberstelle 200 in einen Güllebehälter 410 des Gülle-Tankfahrzeugs 400;
> ∘ transportiert die aufgenommene Gülle zu einer Aufbringfläche A1, A2 der wenigstens einen Abgeberstelle 200 und/oder der wenigstens einen Aufnehmerstelle 200* und bringt diese dort auf;
> ∘ analysiert kontinuierlich im Verlauf der Aufbringung der Gülle G die strömende Gülle G auf ihre maßgebliche Nährstoffkonzentration k hin und ordnet das jeweilige Analyseergebnis der jeweils übernommenen Güllemenge zu, die ebenfalls fahrzeugseitig kontinuierlich mengenmäßig erfasst wird, zwecks Durchführung einer repräsentativen Probenahme der strömenden Gülle G.

- Für die jeweilige Aufbringfläche A1, A2 wird eine zulässige flächenbezogene Nährstoffgabe n vorgegeben.
- Die Ausbringung der Gülle G durch das Gülle-Tankfahrzeug 400 auf die jeweilige Aufbringfläche A1, A2 wird derart gesteuert, dass die zugeordnete zulässige flächenbezogene Nährstoffgabe n in Abhängigkeit von der zeitnah ermittelten Nährstoffkonzentration k eingehalten wird.
- Aus den vorstehenden Maßnahmen resultierende fahrzeugseitige Daten D3 werden zur Dokumentation bereitgestellt.
- Im Verlauf der Übernahme der abgeberseitigen Güllemengen $m_i$ in den fahrzeugseitigen Güllebehälter 410 wird die jeweilige strömende Gülle G auf ihre maßgebliche Nährstoffkonzentration k hin kontinuierlich analysiert und das jeweilige Analyseergebnis wird der jeweiligen abgeberseitigen Güllemenge $m_i$, die ebenfalls fahrzeugseitig mengenmäßig erfasst wird, zwecks Durchführung einer repräsentativen Probenahme der strömenden Gülle G zugeordnet.
- Die in einer abgeberstellenseitigen, aufnehmerstellenseitigen und fahrzeugseitigen Datenübertragungseinrichtung 218, 226, 450 bereitgestellten abgeberseitigen, aufnehmerseitigen und fahrzeugseitigen Daten D1, D2, D3 werden jeweils in einer der jeweiligen Anwendung angemessenen verzugsarmen Echtzeit mittels eines Datennetzwerks 100 und über eine zugeordnete webbasierte abgeberstellenseitigen, aufnehmerstellenseitigen und fahrzeugseitigen Datenverbindung 21, 22, 45 an wenigstens einen Prozessor 110 übermittelt, dort verarbeitet und in wenigstens einem Datenspeicher 120 abgelegt und von dort von der abgeberstellenseitigen, aufnehmerstellenseitigen und fahrzeugseitigen Datenübertragungseinrichtung 218, 226, 450 empfangen.
- Eine abgeberstellenseitige, aufnehmerstellenseitige, abgeberseitige, aufnehmerseitige und fahrer- und/oder fuhrunternehmerseitige Fernsteuerungseinrichtung 217, 223, 300, 300*, 500 sendet Daten mittels des Datennetzwerks 100 über die zugeordnete webbasierte abgeberstellenseitigen, aufnehmerstellenseitigen 21, 22 sowie eine webbasiert abgeberseitige, aufnehmerseitige und fahrer- und/oder fuhrunternehmerseitige Datenverbindung 30, 30*, 50 an den wenigstens einen Prozessor 110 in Verbindung mit dem wenigstens einen Datenspeicher 120 und/oder empfängt entsprechende Daten von diesen.

Die Fernsteuerungseinrichtung 217, 300, 223, 300*, 500 und ggf. 660, wenn optional und zusätzlich eine Abnehmerstelle 600* als Biogasanlage 600 fungiert, ist dazu eingerichtet, wenigstens eine der folgenden verfahrenstechnischen Maßnahmen zu veranlassen:

- Auswertung von Gülleerfassungsdaten, nämlich abgeberseitigen, aufnehmerseitigen, fahrzeugseitigen sowie anlagenseitigen Daten D1, D2, D3, D4, und Ermittlung von Prozessinformationen über den jeweiligen Erfassungsprozess in einer der jeweiligen Anwendung angemessenen verzugsarmen Echtzeit,
- Archivierung von Gülleerfassungsdaten D1, D2, D3, D4 und/oder Prozessinformationen,
- Überwachung, Korrektur und Optimierung des jeweiligen Erfassungsprozesses in einer der jeweiligen Anwendung angemessenen verzugsarmen Echtzeit,
- dynamische Anpassung der Gülle-Erfassungstour 70 (aufnehmerseitige und abgeberseitige Gülleaufbringung 70.1, 70.2, Gülleverbringung 80, Einrichtung von Sonderrouten und Abweichungen von offiziellen Wegen, jeweils in einer der jeweiligen Anwendung angemessenen verzugsarmen Echtzeit,
- dynamische Anpassung der jeweiligen Transportroute zu einer Gülle-Erfassungstour 70, zu einer aufnehmerseitigen und abgeberseitigen Gülleaufbringung 70.1, 70.2, zu einer Gülleverbringung 70.3, zu einer Substrataufnahme und -aufbringung 80, Einrichtung von Sonderrouten und Abweichungen von offiziellen Wegen, jeweils in einer der jeweiligen Anwendung angemessenen verzugsarmen Echtzeit,
- Auswertung von Gülleerfassungsdaten und/oder Prozessinformationen zur vorausschauenden Wartung von Verschleißkomponenten des Erfassungssystems und/oder vorausschauenden Ersatzteilbestellung für dasselbe.

Es hat sich nach dem heutigen Stand der Datentechnik als vorteilhaft, kostensparend und manipulationssicher erwiesen, wenn die im erfindungsgemäßen digital vernetzten Erfassungssystem für Gülle 1000 generierten Daten und angewendeten Anwenderprogramme in dem wenigstens einen Prozessor 110 **(Figur 4)** in Verbindung mit dem wenigstens einen Datenspeicher 120 abgelegt und über das Datennetzwerk 100 innerhalb einer geschlossenen Daten-Cloud 700 verwaltet werden.

ANHANG

Der vorliegende Anmeldungsgegenstand ist hinsichtlich der verwendeten informationstechnischen Begrifflichkeiten wie Datenübertragungseinrichtung, Fernsteuerungseinrichtung, Steuerungseinrichtung, Sensoreinrichtung, Datennetzwerk, Daten-Cloud, Echtzeit nicht festgelegt auf diese Begrifflichkeiten. Es können gleichwertige oder gleichartige Begriffe mitgelesen werden. Dies betrifft auch die hinter diesen Begrifflichkeiten stehenden Geräte und Gerätschaften mit gleicher Wirkung oder Funktion. In diesem Zusammenhang sollen noch einige konkrete Erläuterungen hinzugefügt werden:

**Echtzeit:** Unter Echtzeit soll der Betrieb eines Rechensystems verstanden werden, bei dem Programme zur Verarbeitung anfallender Daten ständig betriebsbereit sind, derart, dass die Verarbeitungsergebnisse innerhalb einer vorgegebenen Zeitspanne verfügbar sind bzw. in einer der jeweiligen Anwendung angemessenen verzugsarmen Zeitspanne. Demzufolge können Zeitspannen von unter einer Sekunde, im Sekundenbereich und bis in den Minutenbereich hinein jeweils angemessen sein. Das bedeutet im Einzelfall, beispielsweise bei ereignisabhängigen Steuerungsfunktionen, dass die Datenverarbeitung (nahezu) simultan mit den entsprechenden Prozessen in der Realität abläuft.

In Fällen, wo beispielsweise der Abgeber, der Aufnehmer, der Fahrer, das Fuhrunternehmen oder der Betreiber der Biogasanlage aus einer jeweiligen Situation heraus sehr schnell eine Entscheidung treffen muss, umfasst die in Frage kommende Zeitspanne der Echtzeit beispielweise nur wenige Sekunden bis Minuten. Bei Auswertungen kann die Zeitspanne auch im Minutenbereich oder länger liegen.

**Datenübertragungseinrichtung:**
Hierunter ist jedwede Einrichtung zu verstehen, die webbasiert bzw. internetbasiert Daten senden und Daten empfangen kann.

**Fernsteuerungseinrichtung:**
Hierunter ist jedwede Einrichtung zu verstehen, die als Endgerät das webbasierte bzw. internetbasierte Eingeben oder Einlesen von Daten und das Versenden dieser Daten ermöglicht und in umgekehrter Richtung Daten empfangen und in jedweder Form ausgeben kann.

**Steuerungseinrichtung:**
Hierunter ist jedwede vorzugsweise lokale Hardware in Verbindung mit einer Software zu verstehen, die ggf. unter Verwendung lokaler Netzwerke automatische Steuerungsabläufe realisiert.

BEZUGSZEICHENLISTE DER VERWENDETEN ABKÜRZUNGEN

1000     digital vernetztes Erfassungssystem für Gülle

21     webbasierte abgeberstellenseitige Datenverbindung
22     webbasierte aufnehmerstellenseitige Datenverbindung
30     webbasierte abgeberseitige Datenverbindung
30*     webbasierte aufnehmerseitige Datenverbindung
45     webbasierte fahrzeugseitige Datenverbindung
50     webbasierte fahrer- und/oder fuhrunternehmerseitige Datenverbindung
67     webbasierte anlagenseitige Datenverbindung

70     Gülle-Erfassungstour
70.1     aufnehmerseitige Gülleaufbringung
70.2     abgeberseitige Gülleaufbringung
70.3     Gülleverbringung

80     Substrataufnahme und -aufbringung

100 Datennetzwerk
110 Prozessor
120 Datenspeicher

200 Abgeberstelle
211 Abgebertank
212 abgeberstellenseitige Sensoreinrichtung
213 abgeberstellenseitige Steuerungseinrichtung
214 abgeberstellenseitiger Prozessor
215 abgeberstellenseitiger Datenspeicher
216 abgeberstellenseitiges Datennetzwerk
217 abgeberstellenseitige Fernsteuerungseinrichtung
218 abgeberstellenseitige Datenübertragungseinrichtung

200* Aufnehmerstelle
221 aufnehmerstellenseitiger Datenspeicher
222 aufnehmerstellenseitiges Datennetzwerk
223 aufnehmerstellenseitige Fernsteuerungseinrichtung
226 aufnehmerstellenseitige Datenübertragungseinrichtung

300 abgeberseitige Fernsteuerungseinrichtung
310 Abgeber
300* aufnehmerseitige Fernsteuerungseinrichtung
310* Aufnehmer

400 Gülle-Tankfahrzeug
410 fahrzeugseitiger Güllebehälter
420 fahrzeugseitiges Annahme- und Abgabesystem

430 fahrzeugseitige Messanlage
431 fahrzeugseitige Güllepumpe
432 fahrzeugseitiges Stellventil
433 fahrzeugseitiger Durchflussmesser
434 fahrzeugseitiger Güllesensor
435 fahrzeugseitige Datenübertragungsleitunge

440 fahrzeugseitige Steuerungseinrichtung
441 fahrzeugseitiger Prozessor
442 fahrzeugseitiger Datenspeicher

450 fahrzeugseitige Datenübertragungseinrichtung

460 fahrzeugseitige Zuflussleitung
461 fahrzeugseitige Messleitung
462 fahrzeugseitige Füllleitung
463 fahrzeugseitige Abgabeleitung
464 fahrzeugseitige Entleerungsleitung

470 Ausbringvorrichtung
500 fahrer- und/oder fuhrunternehmerseitige Fernsteuerungseinrichtung
510 Fahrer (Gülle-Tankfahrzeug)
520 Fuhrunternehmen (Gülle-Tankfahrzeug)

600* Abnehmerstelle
600 Biogasanlage

610 Biogas-Prozessanlage
620 Substratbehälter

630    anlagenseitige Sensoreinrichtung

640    anlagenseitige Steuerungseinrichtung
641    anlagenseitiger Prozessor
642    anlagenseitiger Datenspeicher

650    anlagenseitiges Datennetzwerk
660    anlagenseitige Fernsteuerungseinrichtung
670    anlageseitige Datenübertragungseinrichtung

700    Daten-Cloud

a    abgeberstellenseitiger Fließweg
b    anlagenseitiger Fließweg
c    fahrzeugseitiger Abgabeweg

k        maßgebliche Nährstoffkonzentration -z.B. in [g/kg]
$k_m$      repräsentativer Durchschnittswert der maßgeblichen Nährstoffkonzentration - z.B. in [g/kg]; (Güllegesamt-
          menge $m_{ges}$)
$k_i$      maßgebliche Nährstoffkonzentration - z.B. in [g/kg] (abgeberseitige Güllemenge $m_i$)
$k(t), k_i(t)$    maßgebliche zeitabhängige Nährstoffkonzentration ($k, k_i = f(t)$)

m        Ausbringmenge Gülle z.B. in [kg]
$m_i$      abgeberseitige (bzw. fahrzeugseitige) Güllemenge z.B. in [kg]
$m_{ges}$    fahrzeugseitige Güllegesamtmenge - z.B. in [kg]
$m_N$      Nährstoffmenge - z.B. in [kg]

n    zulässige flächenbezogene Nährstoffgabe - z.B in [g/m$^2$]

t    Zeit, allgemein
$\Delta t$    differenzielle Zeitspanne
dt    infinitesimale Zeitspanne
ta    Zeitdauer für die Ausbringung - z.B. in [s]
tü    Zeitdauer für die Übernahme - z.B. in [s]

v    Vorfahrgeschwindigkeit - z.B. in [m/s]
x    Anzahl

A        erforderliche Aufbringfläche z.B. in [m$^2$]
A1      abgeberstellenseitige Aufbringfläche
A2      maximal notwendige aufnehmerstellenseitige Aufbringfläche
A2*      abgeberstellenseitig erforderliche Aufbringfläche (A2 = A2*)
A2-A1    minimale aufnehmerstellenseitig genutzte Aufbringfläche
A3      maximal verfügbare aufnehmerstellenseitige Aufbringfläche

B    Ausbringbreite - z.B. in [m]

D        Gülleerfassungsdaten
D1      abgeberseitige Daten
D2      aufnehmerseitige Daten
D3      fahrzeugseitige Daten
D4      anlagenseitige Daten

G        Gülle
GK      Güllelieferkette
GMG      fahrzeugseitige Güllemessgröße
aGMG    abgeberstellenseitige Güllemessgröße

H    Hublage
L    Ausbringweg
M    Antriebmotor
N    Nährstoff(e)
NIRS    Nah-Infrarot-Sensor
P    Gülle-Handprobe

Q    Güllestrom z.B. in [kg/s] oder [dm$^3$/s]
Q(t)    zeitabhängiger Güllestrom (Q = f(t))

S1    abgeberstellenseitiger Schlag
S2    Teil des aufnehmerstellenseitigen Schlags
S3    aufnehmerstellenseitiger Schlag

ST    Substrat
STMG    fahrzeugseitige Substratmessgröße
aSTMG    anlagenseitige Substratmessgröße

**Patentansprüche**

1.    Digital vernetztes Erfassungssystem für Gülle (1000), das umfasst:

• wenigstens eine Abgeberstelle (200) und wenigstens eine Aufnehmerstelle (200*) jeweils für Gülle (G), die jeweils so eingerichtet sind, dass sie wenigstens den Mindestanforderungen der Dokumentationspflichten des jeweiligen geltenden Düngerechts dadurch Rechnung tragen, dass sie entsprechende geforderte abgeberseitige Daten (D1) und aufnehmerseitige Daten (D2, D4) bereitstellen,
• wenigstens ein Gülle-Tankfahrzeug (400), das so eingerichtet ist,

◦ dass es Gülle (G) aus wenigstens einem Abgebertank (211) der wenigstens einen Abgeberstelle (200) aufnimmt,
◦ dass es die aufgenommene Gülle (G) zu einer Aufbringfläche (A1, A2) der wenigstens einen Abgeberstelle (200) und/oder der wenigstens einen Aufnehmerstelle (200*) transportiert und dort ausbringt,
◦ dass es im Verlauf der Ausbringung der Gülle (G) mittels einer fahrzeugseitigen Steuerungseinrichtung (440) zeitnah wenigstens folgende Handlungen durchführt:

(i) kontinuierliche Analyse der jeweiligen strömenden Gülle (G) durch einen im Güllestrom (Q) angeordneten fahrzeugseitigen Güllesensor (434) auf ihre maßgebliche Nährstoffkonzentration (k) hin und Zuordnung des jeweiligen Analyseergebnisses zur jeweils übernommenen Güllemenge, die ebenfalls fahrzeugseitig kontinuierlich mengenmäßig erfasst wird, zwecks Durchführung einer repräsentativen Probenahme der strömenden Gülle (G),
(ii) Vorgabe einer für die jeweilige Aufbringfläche (A1, A2) zulässigen flächenbezogenen Nährstoffgabe (n),
(iii) Ermittlung von Steuerdaten aus den Handlungen (i) und (ii) zur Veränderung des aus einer Ausbringvorrichtung (470) des Gülle-Tankfahrzeuges (400) austretenden Güllestroms (Q) mit dem Ziel der Einhaltung der zulässigen flächenbezogenen Nährstoffgabe (n) auf die jeweilige Aufbringfläche (A1, A2) und
(iv) Bereitstellung von entsprechenden fahrzeugseitigen Daten (D3) zur Dokumentation,

◦ dass das Gülle-Tankfahrzeug (400) die jeweilige strömende Gülle (G) bei der Übernahme aus dem Abgebertank (211) in einen fahrzeugseitigen Güllebehälter (410) durch den fahrzeugseitigen Güllesensor (434) auf ihre maßgebliche Nährstoffkonzentration (k) hin kontinuierlich analysiert und das jeweilige Analyseergebnis der jeweils übernommenen Güllemenge, die ebenfalls fahrzeugseitig kontinuierlich mengenmäßig erfasst wird, zwecks Durchführung einer repräsentativen Probenahme der strömenden Gülle (G) zuordnet;

mit dem Erfassungssystem für Gülle (1000), bei dem weiterhin

• die wenigstens eine Abgeberstelle (200) eine abgeberstellenseitige Datenübertragungseinrichtung (218) aufweist,

• die wenigstens eine Aufnehmerstelle (200*) eine aufnehmerstellenseitige Datenübertragungseinrichtung (226) aufweist,

• das wenigstens eine Gülle-Tankfahrzeug (400) eine fahrzeugseitige Datenübertragungseinrichtung (450) aufweist,

• in oder im Bereich der wenigstens einen Abgeberstelle (200) jeweils wenigstens eine abgeberstellenseitige Fernsteuereinrichtung (217) vorgesehen ist,

• in oder im Bereich der wenigstens einen Aufnehmerstelle (200*) jeweils wenigstens eine aufnehmerstellenseitige Fernsteuereinrichtung (223) vorgesehen ist,

• an oder im Bereich der wenigstens einen Abgeberstelle (200) jeweils eine abgeberseitige Fernsteuerungseinrichtung (300) für einen Abgeber (310) von Gülle (G) vorgesehen ist,

• an oder im Bereich der wenigstens einen Aufnehmerstelle (200*) jeweils eine aufnehmerseitige Fernsteuerungseinrichtung (300*) für einen Aufnehmer (310*) von Gülle (G) vorgesehen ist,

• in dem wenigstens einen Gülle-Tankfahrzeug (400) jeweils wenigstens eine fahrerseitige Fernsteuerungseinrichtung (500) für einen zugeordneten Fahrer (510) und/oder bei einem zugeordneten Fuhrunternehmen (520) eine fuhrunternehmerseitige Fernsteuerungseinrichtung (500) vorgesehen sind/ist,

• die jeweilige Datenübertragungseinrichtung (218, 226, 450) sowie die jeweilige Fernsteuerungseinrichtung (217, 223, 300, 300*, 500) mit einem Datennetzwerk (100) datenleitend verbunden ist, und das Datennetzwerk (100) mit wenigstens einem Prozessor (110) und wenigstens einem Datenspeicher (120) in datenleitender Verbindung steht,

• die jeweilige Datenübertragungseinrichtung (218, 226, 450) sowie die jeweilige Fernsteuerungseinrichtung (217, 223, 300, 300*, 500) dazu eingerichtet sind, die zugeordneten abgeberseitigen, aufnehmerseitigen und fahrzeugseitigen Daten (D1, D2, D3) in einer der jeweiligen Anwendung angemessenen verzugsarmen Echtzeit drahtlos an das Datennetzwerk (100) zu senden und/oder von diesem zu empfangen,.

2. Digital vernetztes Erfassungssystem für Gülle (1000) nach Anspruch 1,
**dadurch gekennzeichnet,**

• **dass** optional und zusätzlich wenigstens eine Abnehmerstelle (600*) als Biogasanlage (600) fungiert, die so eingerichtet ist, dass sie ein im Biogas-Prozess beim Einsatz von Gülle (G) anfallendes Substrat (ST) sammelt und zur Abgabe zusammen mit zugeordneten anlagenseitigen Daten (D4) bereitstellt,

• **dass** die wenigstens eine Biogasanlage (600) eine anlagenseitige Datenübertragungseinrichtung (670) aufweist,

• **dass** in oder im Bereich der wenigstens einen Biogasanlage (600) jeweils wenigstens eine anlagenseitige Fernsteuereinrichtung (660) vorgesehen ist,

• **dass** die jeweilige anlagenseitige Datenübertragungseinrichtung (670) sowie die jeweilige anlagenseitige Fernsteuerungseinrichtung (660) mit dem Datennetzwerk (100) datenleitend verbunden ist und das Datennetzwerk (100) mit wenigstens dem Prozessor (110) und wenigstens dem Datenspeicher (120) in datenleitender Verbindung steht, und

• **dass** die jeweilige anlagenseitige Datenübertragungseinrichtung (670) sowie die jeweilige anlagenseitige Fernsteuerungseinrichtung (660) dazu eingerichtet sind, die anlagenseitigen Daten (D4) in einer der jeweiligen Anwendung angemessenen verzugsarmen Echtzeit drahtlos an das Datennetzwerk (100) zu senden und/oder von diesem zu empfangen.

3. Digital vernetztes Erfassungssystem für Gülle (1000) nach Anspruch 1 oder 2,
**dadurch gekennzeichnet,**
**dass** das Datennetzwerk (100) als eines der folgenden ausgebildet ist:

• Web,
• Ethernet,
• Intranet,
• Internet.

4. Digital vernetztes Erfassungssystem für Gülle (1000) nach einem der vorstehenden Ansprüche,
**dadurch gekennzeichnet,**
**dass** der mit dem Datennetzwerk (100) jeweils datenleitend verbundene wenigstens eine Prozessor (110) und wenigstens eine Datenspeicher (120) in einer geschlossenen Daten-Cloud (700) oder dezentral bei einem Betreiber des Erfassungssystems für Gülle (1000) angeordnet sind.

**5.** Digital vernetztes Erfassungssystem für Gülle (1000) nach einem der vorstehenden Ansprüche,
**dadurch gekennzeichnet,**
**dass** datenleitende Verbindungen innerhalb der Abgeberstelle (200), der Aufnehmerstelle und/oder Biogasanlage (200*, 600) und des Gülle-Tankfahrzeuges (400) als wenigstens eine der folgenden ausgebildet sind:

  • BUS-Systeme wie

    ◦ Profibus
    ◦ CAN-Bus
    ◦ MOD-Bus,

  • Ethernet,
  • Direktverbindung,
  • allgemeine drahtlose Verbindungen wie

    ◦ Bluetooth
    ◦ Funkstrecke
    ◦ RFID.

**6.** Digital vernetztes Erfassungssystem für Gülle (1000) nach einem der vorstehenden Ansprüche,
**dadurch gekennzeichnet,**

  • **dass** die wenigstens eine Abgeberstelle (200) eine abgeberstellenseitige Steuerungseinrichtung (213) zur automatischen Steuerung der Abgeberstelle (200) aufweist, mit wenigstens einem abgeberstellenseitigen Prozessor (214) und wenigstens einem abgeberstellenseitigen Datenspeicher (215),
  • **dass** die abgeberstellenseitigen Steuerungseinrichtung (213) datenleitend verbunden ist mit einer abgeberstellenseitigen Sensoreinrichtung (212) zur Ermittlung der abgeberseitigen Daten (D1), und
  • **dass** die abgeberstellenseitige Steuerungseinrichtung (213) weiterhin über ein abgeberstellenseitiges Datennetzwerk (216) datenleitend verbunden ist mit der abgeberstellenseitigen Datenübertragungseinrichtung (218) und der abgeberstellenseitigen Fernsteuerungseinrichtung (217).

**7.** Digital vernetztes Erfassungssystem für Gülle (1000) nach einem der vorstehenden Ansprüche,
**dadurch gekennzeichnet,**
**dass** die wenigstens eine Aufnehmerstelle (200*) wenigstens einen aufnehmerstellenseitigen Datenspeicher (221) aufweist, der über ein aufnehmerstellenseitiges Datennetzwerk (222) datenleitend verbunden ist mit der aufnehmerstellenseitigen Fernsteuerungseinrichtung (223) und der aufnehmerstellenseitigen Datenübertragungseinrichtung (226).

**8.** Digital vernetztes Erfassungssystem für Gülle (1000) nach einem der vorstehenden Ansprüche,
**dadurch gekennzeichnet,**

  • **dass** das wenigstens eine Gülle-Tankfahrzeug (400) ein fahrzeugseitiges Annahme- und Abgabesystem (420) für die Gülle (G) mit einer fahrzeugseitigen Messanlage (430) aufweist, das die fahrzeugseitige Steuerungseinrichtung (440) mit wenigstens einem fahrzeugseitigen Prozessor (441) und wenigstens einem fahrzeugseitigen Datenspeicher (442) aufnimmt,
  • **dass** die fahrzeugseitige Messanlage (430) wenigstens den fahrzeugseitigen Güllesensor (434), wenigstens einen fahrzeugseitigen Durchflussmesser (433) und wenigstens eine fahrzeugseitige Güllepumpe (431) und ein fahrzeugseitiges Stellventil (432) oder wenigstens eine regelbare fahrzeugseitige Güllepumpe (431) allein aufweist, und
  • **dass** die fahrzeugseitige Steuerungseinrichtung (440) einerseits datenleitend verbunden ist mit der fahrzeugseitigen Messanlage (430) zur Ermittlung der fahrzeugseitigen Daten (D3) und andererseits datenleitend verbunden ist mit der fahrzeugseitigen Datenübertragungseinrichtung (450).

**9.** Digital vernetztes Erfassungssystem für Gülle (1000) nach einem der Ansprüche 2 bis 8,
**dadurch gekennzeichnet,**

• **dass** die wenigstens eine Biogasanlage (600) eine anlagenseitige Steuerungseinrichtung (640) mit wenigstens einem anlagenseitigen Prozessor (641) und wenigstens einem anlagenseitigen Datenspeicher (642) zur automatischen Steuerung der Aufnahme des Substrats (ST) in einen und zur Abgabe aus dem Substratbehälter (620) aufweist, und

• **dass** die anlagenseitige Steuerungseinrichtung (640) über ein anlagenseitiges Datennetzwerk (650) datenleitend verbunden ist mit einer anlagenseitigen Sensoreinrichtung (630) zur Ermittlung wenigstens der anlagenseitigen Daten (D4) und weiterhin datenleitend verbunden ist mit der anlagenseitigen Fernsteuerungseinrichtung (660) und der anlagenseitigen Datenübertragungseinrichtung (670).

**10.** Digital vernetztes Erfassungssystem für Gülle (1000) nach Anspruch 9,
**dadurch gekennzeichnet,**
**dass** die abgeberstellenseitige, die fahrzeugseitige und die anlagenseitige Steuerungseinrichtung (213, 440, 640) sowie die Aufnehmerstelle (200*) jeweils einen temporären Zwischenspeicher aufweist, der so eingerichtet ist, dass bei mangelnder Konnektivität im Datennetzwerk (100) die jeweils zugeordneten abgeberseitigen, aufnehmerseitigen, fahrzeugseitigen sowie die anlagenseitigen Daten (D1, D2, D3, D4) im Zwischenspeicher temporär gespeichert und zu einem späteren Zeitpunkt, wenn eine Netzverbindung wieder vorliegt, übertragen werden.

**11.** Digital vernetztes Erfassungssystem (1000) für Gülle (M) nach einem der Ansprüche 6 bis 9,
**dadurch gekennzeichnet,**
**dass** die abgeberstellenseitige Sensoreinrichtung (212) mindestens einen der folgenden Sensoren aufweist: Temperatursensor; Drucksensor; Durchfluss-/Strömungssensor; Leitfähigkeitssensor; Trübungssensor/Schwebekörpersensor; Viskositätssensor; pH-Wert-Sensor; Schaumsensor; Füllstandssensor; Leermeldesensor; Bildsensor, insbesondere Videokamera; Drehzahlsensor; Gewichtssensor.

**12.** Digital vernetztes Erfassungssystem für Gülle (1000) nach Anspruch 8,
**dadurch gekennzeichnet,**
**dass** das fahrzeugseitige Annahme- und Abgabesystem (420) neben dem fahrzeugseitigen Durchflussmesse (433) und dem fahrzeugseitigen Güllesensor (434) mindestens einen der folgenden fahrzeugseitigen Sensoren aufweist: Temperatursensor; Drucksensor; Leitfähigkeitssensor; Trübungssensor/Schwebekörpersensor; Viskositätssensor; pH-Wert-Sensor; Schaumsensor; Füllstandssensor; Leermeldesensor; Bildsensor, insbesondere Videokamera; Gewichtssensor; Endlagensensor; Lagerüberwachungssensor; Verschleißsensor; Drehmomentsensor; Drehzahlsensor.

**13.** Digital vernetztes Erfassungssystem für Gülle (1000) nach einem der vorstehenden Ansprüche,
**dadurch gekennzeichnet,**
**dass** der fahrzeugseitige Güllesensor (434) als Nah-Infrarot-Sensor (NIRS) ausgebildet ist.

**14.** Digital vernetztes Erfassungssystem für Gülle (1000) nach Anspruch 9,
**dadurch gekennzeichnet,**
**dass** die anlagenseitige Sensoreinrichtung (630) mindestens einen der folgenden Sensoren aufweist: Temperatursensor; Drucksensor; Durchflusssensor/Strömungssensor; Leitfähigkeitssensor; Leermeldesensor; Trübungssensor/Schwebekörpersensor; Viskositätssensor; pH-Wert-Sensor; Schaumsensor; Füllstandssensor; Bildsensor, insbesondere Videokamera; Gewichtssensor.

**15.** Digital vernetztes Erfassungssystem für Gülle (1000) nach einem der Ansprüche 2 bis 14,
**dadurch gekennzeichnet,**
**dass** die jeweilige Fernsteuerungseinrichtung (217, 300, 223, 300*, 500, 660) dazu eingerichtet ist, wenigstens eine der folgenden Maßnahmen zu veranlassen:

• Auswertung von Gülleerfassungsdaten (D), nämlich abgeberseitige, aufnehmerseitige, fahrzeugseitige sowie anlagenseitige Daten (D1, D2, D3, D4) und Ermittlung von Prozessinformationen über den jeweiligen Erfassungsprozess in einer der jeweiligen Anwendung angemessenen verzugsarmen Echtzeit,
• Archivierung von Gülleerfassungsdaten (D) und/oder Prozessinformationen,
• Überwachung, Korrektur und Optimierung des jeweiligen Erfassungsprozesses in einer der jeweiligen Anwendung angemessenen verzugsarmen Echtzeit,
• dynamische Anpassung der jeweiligen Transportroute zu einer Gülle-Erfassungstour (70), zu einer aufnehmerseitigen und abgeberseitigen Gülleaufbringung (70.1, 70.2), zu einer Gülleverbringung (70.3), zu einer Substrataufnahme und -aufbringung (80), Einrichtung von Sonderrouten und Abweichungen von offiziellen Wegen, jeweils in einer der jeweiligen Anwendung angemessenen verzugsarmen Echtzeit,
• Auswertung von abgeberseitigen, aufnehmerseitigen, fahrzeugseitigen sowie anlagenseitigen Daten (D1, D2, D3, D4) und/oder Prozessinformationen zur vorausschauenden Wartung von Verschleißkomponenten des Erfassungssystems für Gülle (1000) und/oder vorausschauenden Ersatzteilbestellung für dasselbe.

16. Verfahren zur Erfassung von Gülle (G) in einem digital vernetzten Erfassungssystem für Gülle (1000), wobei das Erfassungssystem für Gülle (1000) eine Güllelieferkette (GK) bildet und das Verfahren in folgenden Schritten durchgeführt wird:

   • wenigstens eine Abgeberstelle (200) für Gülle (G) und ein jeweils zugeordneter Abgeber (310) stellen eine abgeberseitige Güllemenge ($m_i$) und zur Dokumentation zugeordnete, geforderte abgeberseitige Daten (D1) bereit,
   • wenigstens eine Aufnehmerstelle (200*) für Gülle (G) und ein jeweils zugeordneter Aufnehmer (310*) stellen zur Dokumentation zugeordnete, geforderte aufnehmerseitige Daten (D2) bereit,
   • wenigstens ein Gülle-Tankfahrzeug (400) mit einem zugeordneten Fahrer (510) und/oder Fuhrunternehmen (520) werden zur Aufnahme, zum Transport und zur Abgabe der Gülle (G) bereitgestellt, wobei das Gülle-Tankfahrzeug (400)

      ∘ im Verlauf einer vorgegebenen Gülle-Erfassungstour (70) die Gülle (G) aus wenigstens einem Abgebertank (211) der wenigstens einen Abgeberstelle (200) in einen Güllebehälter (410) des Gülle-Tankfahrzeugs (400) überführt,
      ∘ die aufgenommene Gülle (G) zu einer Aufbringfläche (A1, A2) der wenigstens einen Abgeberstelle (200) und/oder der wenigstens einen Aufnehmerstelle (200*) transportiert und dort aufbringt,
      ∘ im Verlauf der Aufbringung der Gülle (G) die strömende Gülle (G) auf ihre maßgebliche Nährstoffkonzentration (k) hin kontinuierlich analysiert und das jeweilige Analyseergebnis der jeweils übernommenen Güllemenge, die ebenfalls fahrzeugseitig kontinuierlich mengenmäßig erfasst wird, zwecks Durchführung einer repräsentativen Probenahme der strömenden Gülle (G) zuordnet,

   • für die jeweilige Aufbringfläche (A1, A2) wird eine zulässige flächenbezogene Nährstoffgabe (n) vorgegeben,
   • die Ausbringung der Gülle (G) durch das Gülle-Tankfahrzeug (400) auf die jeweilige Aufbringfläche (A1, A2) wird derart gesteuert, dass die zugeordnete zulässige flächenbezogene Nährstoffgabe (n) in Abhängigkeit von der zeitnah ermittelten Nährstoffkonzentration (k) eingehalten wird,
   • entsprechende fahrzeugseitige Daten (D3) werden zur Dokumentation bereitgestellt,
   • im Verlauf der Übernahme der abgeberseitigen Güllemengen ($m_i$) in den fahrzeugseitigen Güllebehälter (410) wird die jeweilige strömende Gülle (G) auf ihre maßgebliche Nährstoffkonzentration (k) hin kontinuierlich analysiert und das jeweilige Analyseergebnis wird der jeweiligen abgeberseitigen Güllemenge ($m_i$), die ebenfalls fahrzeugseitig mengenmäßig erfasst wird, zwecks Durchführung einer repräsentativen Probenahme der strömenden Gülle (G) zugeordnet,
   • die in einer abgeberstellenseitigen, aufnehmerstellenseitigen und fahrzeugseitigen Datenübertragungseinrichtung (218, 226, 450) bereitgestellten abgeberseitigen, aufnehmerseitigen und fahrzeugseitigen Daten (D1, D2, D3) werden jeweils in einer der jeweiligen Anwendung angemessenen verzugsarmen Echtzeit mittels eines Datennetzwerks (100) und über eine zugeordnete webbasierte abgeberstellenseitigen, aufnehmerstellenseitigen und fahrzeugseitigen Datenverbindung (21, 22, 45) an wenigstens einen Prozessor (110) übermittelt, dort verarbeitet und in wenigstens einem Datenspeicher (120) abgelegt und von dort von der abgeberstellenseitigen, aufnehmerstellenseitigen und fahrzeugseitigen Datenübertragungseinrichtung (218, 226, 450) empfangen,
   • eine abgeberstellenseitige, aufnehmerstellenseitige, abgeberseitige, aufnehmerseitige und fahrer- und/oder fuhrunternehmerseitige Fernsteuerungseinrichtung (217, 223, 300, 300*, 500) sendet Daten mittels des Datennetzwerks (100) über die zugeordnete webbasierte abgeberstellenseitigen, aufnehmerstellenseitigen (21, 22) sowie eine webbasiert abgeberseitige, aufnehmerseitige und fahrer- und/oder fuhrunternehmerseitige Datenverbindung (30, 30*, 50) an den wenigstens einen Prozessor (110) in Verbindung mit dem wenigstens einen Datenspeicher (120) und/oder empfängt entsprechende Daten von diesen.

17. Verfahren zur Erfassung von Gülle (G) nach Anspruch 16,
   **dadurch gekennzeichnet,**

   • **dass** optional und zusätzlich wenigstens eine Abnehmerstelle (600*) als Biogasanlage (600) fungiert, die so eingerichtet ist, dass sie ein im Biogas-Prozess beim Einsatz von Gülle (G) anfallendes Substrat (ST) sammelt und zur Abgabe zusammen mit zugeordneten anlagenseitigen Daten (D4) bereitstellt,

• **dass** im Rahmen einer Gülleverbringung (70.3) durch das Gülle-Tankfahrzeug (400) Gülle (G) in die Biogasanlage (600) geliefert und diese Lieferung durch die zugeordneten fahrzeugseitige Daten (D3) dokumentiert wird,

• **dass** im Rahmen einer Substrataufnahme und -aufbringung (80) das Substrat (ST) durch das Gülle-Tankfahrzeug (400) von der Biogasanlage (600) auf die jeweilige Aufbringfläche (A1, A2) unter sinngemäßer Anwendung der für jeweilige Ausbringung von Gülle (G) geltenden Regularien aufgebracht wird,

• **dass** die in einer anlagenseitigen Datenübertragungseinrichtung (670) bereitgestellten anlagenseitigen Daten (D4) in einer der jeweiligen Anwendung angemessenen verzugsarmen Echtzeit mittels des Datennetzwerks (100) über eine zugeordnete webbasierte anlagenseitige Datenverbindung (67) an wenigstens den Prozessor (110) übermittelt, dort verarbeitet und in wenigstens dem Datenspeicher (120) abgelegt und von dort von der anlagenseitigen Datenübertragungseinrichtung (670) empfangen werden und

• **dass** eine anlagenseitige Fernsteuerungseinrichtung (660) die anlagenseitigen Daten (D4) mittels des Datennetzwerks (100) über die zugeordnete webbasierte anlagenseitige Datenverbindung (67) an den wenigstens einen Prozessor (110) in Verbindung mit dem wenigstens einen Datenspeicher (120) sendet und/oder von diesen empfängt.

**200**   **400**   **600\*; 600**   **200\***

| 211 | | 410 | | 610 | | 223 |

| 212 | | 430 | ← 420 | 620 | | 222 |

| 217 | | 441 | ← 440 | 630 | | 221 |

| 216 | | 442 | | 660 | | 226 |

213
| 215 | ← | 450 | | 650 |

| 214 | | | | 642 | ← 640

| 218 | | | | 641 |

| | | | | 670 |

21
D1
aGMG

45
D3
GMG
STMG

67
D4; aSTMG

22
D2

**100**
D; D1, D2, D3, D4

30   30\*   50

**300**   **300\***   **500**   110   120

**1000**
(GK)

# Figur 1

Figur 2

Figur 4

Figur 3

400

EP 3 872 723 A1

Europäisches
Patentamt

European
Patent Office

Office européen
des brevets

**EUROPÄISCHER RECHERCHENBERICHT**

Nummer der Anmeldung

EP 21 15 5212

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2011/130927 A1 (ZUNHAMMER SEBASTIAN [DE]) 2. Juni 2011 (2011-06-02) * Absätze [0003], [0041] - [0049]; Abbildungen 3,6 * ----- | 1-17 | INV. G06Q10/06 G06Q50/02 G06Q50/30 A01B79/00 A01C23/04 |
| A | DE 10 2011 110638 A1 (KUJAWSKI OLAF [DE]) 21. Februar 2013 (2013-02-21) * Absätze [0040], [0170], [0173] * ----- | 2,3,5,9, 13,17 | |
| A | DE 10 2016 012078 A1 (SCHRÖDER GERDA [DE]) 27. April 2017 (2017-04-27) * Absätze [0003], [0013], [0037] - [0042], [0051] * ----- | 3-7,11, 12,14 | |
| A | DE 34 40 254 A1 (TUCHENHAGEN OTTO GMBH [DE]) 5. Juni 1986 (1986-06-05) * Seite 21 - Seite 23 * ----- | 15 | |
| A | EP 2 197 171 A2 (CLAAS SELBSTFAHR ERNTEMASCH [DE]) 16. Juni 2010 (2010-06-16) * Absätze [0043], [0054], [0085] * ----- | 3,5 | |

| | RECHERCHIERTE SACHGEBIETE (IPC) |
|---|---|
| | G06Q A01B A01C |

Der vorliegende Recherchenbericht wurde für alle Patentansprüche erstellt

| Recherchenort | Abschlußdatum der Recherche | Prüfer |
|---|---|---|
| München | 28. Juni 2021 | Hopper, Eva |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 15 5212

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-06-2021

| Im Recherchenbericht angeführtes Patentdokument | Datum der Veröffentlichung | Mitglied(er) der Patentfamilie | Datum der Veröffentlichung |
|---|---|---|---|
| US 2011130927 A1 | 02-06-2011 | CA 2699187 A1 | 17-04-2008 |
| | | DE 202006015589 U1 | 28-12-2006 |
| | | DK 2107865 T3 | 13-11-2017 |
| | | EP 2107865 A1 | 14-10-2009 |
| | | PL 2107865 T3 | 29-12-2017 |
| | | US 2011130927 A1 | 02-06-2011 |
| | | WO 2008043502 A1 | 17-04-2008 |
| DE 102011110638 A1 | 21-02-2013 | DE 102011110638 A1 | 21-02-2013 |
| | | EP 2559750 A1 | 20-02-2013 |
| DE 102016012078 A1 | 27-04-2017 | KEINE | |
| DE 3440254 A1 | 05-06-1986 | KEINE | |
| EP 2197171 A2 | 16-06-2010 | EP 2197171 A2 | 16-06-2010 |
| | | RU 2009145027 A | 20-06-2011 |
| | | UA 101320 C2 | 25-03-2013 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2010311173 A1
- DE 202006015589 U1
- DE 102008005650 A1